(19) Europäisches Patentamt

European Patent Office

Office européen des brevets

(11) **EP 1 626 032 A1**

(12) **EUROPEAN PATENT APPLICATION**
published in accordance with Art. 158(3) EPC

(43) Date of publication:
**15.02.2006 Bulletin 2006/07**

(51) Int Cl.:
**B82B 1/00** (2000.01)   **H01L 29/06** (1974.07)

(21) Application number: **04723743.3**

(22) Date of filing: **26.03.2004**

(86) International application number:
**PCT/JP2004/004260**

(87) International publication number:
**WO 2004/096697 (11.11.2004 Gazette 2004/46)**

(84) Designated Contracting States:
**AT BE BG CH CY CZ DE DK EE ES FI FR GB GR HU IE IT LI LU MC NL PL PT RO SE SI SK TR**

(30) Priority: **28.04.2003 JP 2003124480**

(71) Applicant: **Japan Science and Technology Agency Kawaguchi-shi, Saitama 332-0012 (JP)**

(72) Inventor: **ISHIBASHI, Akira Sapporo-shi, Hokkaido 065-0016 (JP)**

(74) Representative: **HOFFMANN EITLE Patent- und Rechtsanwälte Arabellastrasse 4 D-81925 München (DE)**

(54) **FUNCTIONAL ELEMENT AND PRODUCTION METHOD THEREFOR AND FUNCTIONAL SYSTEM AND FUNCTIONAL MATERIAL**

(57)   A functional device is formed by coupling a first structure formed by local interaction and a second structure formed according to a predetermined global rule via a third structure having an anisotropic configuration. The third structure may be made by stacking two superlattice thin pieces, each split from a one-dimensional superlattice in form of a periodical lamination of conductive layers and dielectric layers, by rotating one from the other by 90 degrees.

Fig. 24A

Fig. 24B

Fig. 24C

**Description**

Technical Field

This invention relates to a functional device, its manufacturing method, functional system and functional material, and more particularly, to integration of a bottom-up system and a top-down system.

Background Art

Conventional mainstream functional devices are those manufactured by a top-down approach based upon micro-fabrication, as represented by semiconductor integrated circuits. Especially regarding semiconductor devices, huge semiconductor electronics industry has been established, via inventions of transistors by Bardeen, et al. and inventions of semiconductor integrated circuits by Noyce et al and/or Kilby, et al.

On the other hand, the top-down approach begins to see delimitation in various points. As a technique that breaks the limit, a bottom-up approach by self-organization, etc. has been remarked and studied actively.

Both cell systems and neuron systems have been reported to continuously expand and grow by autonomous dispersion at individual sites (R.R. Llinas, The Biology of the Brain, p.94, W.H. Freeman & Company, NY, 1989). This is classified to bottom-up systems.

In bottom-up systems, individual portions independently build structures according to local rules or interactions that lead to autonomous decentralized systems. It has been demonstrated by using cellular automaton that there are four different types of structure-building schemes (constant, periodical (nested), functionally structured, and random) with respect to time (S. Wolfram, A New Kind of Science, pp. 51-81, Wolfram Media Inc., IL, USA, 2002).

Also with respect to time, especially, based upon the concept of time projection the Inventor, et al. reported an improvement of a time projection chamber (TPC) as an elementary particle detector using secondary electrons continuously moving with time (electrons generated along trajectories of elementary particles), based on constancy of the drift velocity (P. Nemethy, P. Oddone, N. Toge, and A. Ishibashi, Nuclear Instruments and Methods 212 (1983) 273-280).

Useful and interesting physical phenomena have been observed, such as surface strengthening effect by plasmon excitation observed in a nanospace formed by metal interfaces, especially in a local space between a two-dimensional sample plane and an opposed probe (Futamata, et al., Spectroscopical Society of Japan, Lecture Symposium 2002 Spring "The Forefront of Microscopic Vibration Spectroscopy" Lecture Papers, pp.20-23).

The Inventor, et al. has also reported that resolution of a one-atomic layer in the growth direction is obtained in growth of a semiconductor using metal organic chemical vapor deposition (MOCVD) (A. Ishibashi, MOCVD-grown Atomic Layer Superlattices, Spectroscopy of Semiconductor Microstructures, eds. G. Fasol, A. Fasolino, P. Lugli, Plenum Press, NY, 1989).

In electrochemical growth as well, details of the growth mechanism have been known (Shiro Haruyama, Electrochemistry for Surface Engineers, p. 112, Maruzen, Tokyo, 2001).

In the field of electrochemistry, it has been known that polymeric electrolyte can be deposited on a work by immersing the work and a counter electrode into water containing neutralized polymeric electrolyte and applying d.c. current across the work and the counter electrode (edited by Tsuguo Yamaoka, "New Development of Practical Polymeric Resist Materials, Their Applications as Photopolymers", Chapter 6, CMC Shuppan, 1996).

Also reported has been a structure inserting a molecular element at a crossing point of approximately 40 nm wide metal wires put crosswise (Y. Chen, D.A.A. Ohlberg, X. Li, D.R. Stewart, R.S. Williams, J.O. Jeppesen, K.A. Nielsen, J.F. Stoddart, D.L. Olynick, and E. Anderson, Nanoscale Molecular Switch Devices Fabricated by Imprint Lithography, Appl. Phys. Lett. 82 (2003) 1610).

Further, as another example of bottom-up schemes, there have been proposed a method of building structures by self-organized progressive hierarchical acquisition (SOPHIA) and a method of growing neurons (Japanese Patent Laid-open Publication No. JP2000-216499, Pamphlet of International Publication No. WO02/35616). In addition, there is gene-governed expression of configurations (gene-derived structures) universal to life and biological systems. On the other hand, as other examples of the top-down systems, there are MEMS systems (micro electromechanical systems), microchemical reactors, and building of structures by human brains (brain-derived structures) as homo faber, in general (for example, Takeshi Yoro, "Yuinoron", Seidosha, 1989).

If we could integrate those top-down systems and bottom-up systems can be integrated, united, or unified it would have been possible to make the best use of both advantages and realize new functional devices not existing heretofore. However, no effective techniques have been proposed actually to the Inventor's knowledge.

It is therefore an object of the present invention to provide a functional device having a high property to make the union of bottom-up systems represented by living matters and top-down systems represented by silicon LSI, as well as a manufacturing thereof and a functional system using the functional device.

Another object of the present invention is to provide a functional material suitable for use as the functional device.

The other and further objects of the present invention will be apparent from the description made below with reference to the accompanying drawings.

Disclosure of the Invention

The Inventor has been engaged in earnest studies to solve the above problems involved in the conventional techniques. Summary of the studies is shown below.

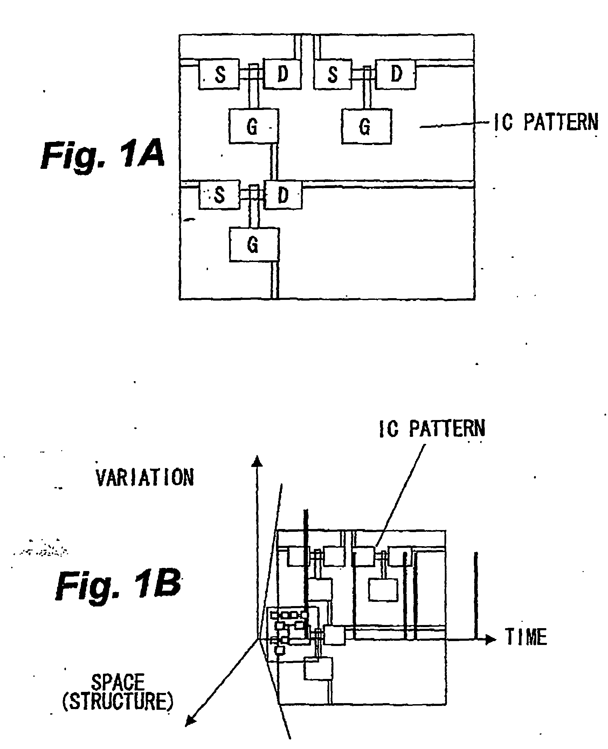

As widely known, two-dimensional patterning by photolithography is often used in the manufacture of semiconductor devices by the top-down approach. Fig. 1A shows MOSLSI (memory, for example) as an example of a semiconductor device. As shown in Fig. 1A, two-dimensional patterning is usually conducted by using UV (ultraviolet) or EUV (extreme ultraviolet) photolithography, or electron beam lithography, at one time at each point of time (instantaneously at each time of each elementary process such as batch exposure, development, etching, and so on, i.e. at individual points on a time axis) under no exchange of information in spatially lateral direction in the surface of the semiconductor substrates). That is, one of large characteristics of two-dimensional patterning is to weave the time into structures discontinuously and sporadically.

In two-dimensional patterning, for example, configuration of a structure is determined by photo-lithography through batch exposure of a photoresist using a photo mask. Therefore, upon building a structure, there is no exchange of information in lateral directions among the in-plane structures. More specifically, causality mainly exists, thanks to the photo-mask, in interaction in the vertical direction relative to a plane (we can call this out-of-plane causality) and not in the in-plane direction. In the two-dimensional patterning, block structures are produced under a global rule provided by photo-lithography as shown in Fig. 1B, and there is a particular directionality for each block. Therefore, the spatial configuration is anisotropic in general from both microscopic and macroscopic viewpoints. In other words, configuration of the structure is determined by extrinsic factors, and it is a just real-spatial expression of a circuit design generated in human-brain. In addition, structural changes on the substrate become a series of pulses in form of a $\delta$ function relative to the time.

Thus, the top-down systems are characterized as an anisotropic (directional) structures which time is projected (or woven into) discontinuously to, and is anisotropic in space-wise. Let a system be expressed by T when having time continuous projectivity or spatial isotropy, and let a system be expressed by $\downarrow$ when having time discontinuous projectivity or spatial anisotropy. If the system has time continuous projectivity and spatial isotropy, and is expressed by $(\uparrow,\uparrow)$, the top-down system can be expressed by (time projectivity, spatial directionality) = $(\downarrow,\downarrow)$, since the system is discontinuous in time-wise and anisotropic in space-wise.

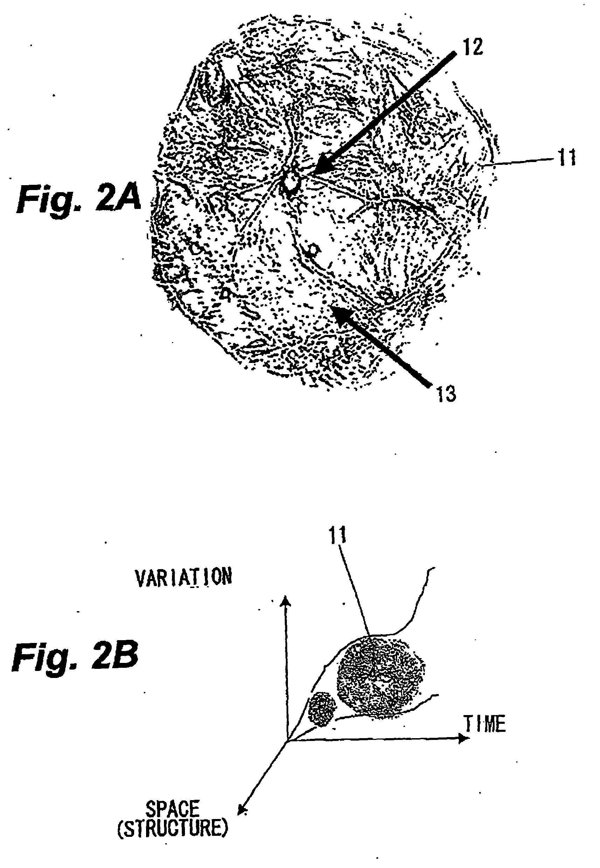

On the other hand, another stream whose importance has been remarked recently is so-called bottom-up systems. The systems include self-organized systems, for example, composed of inorganic substances, such as those represented by semiconductor quantum dots. Growth of cells and neuron systems as shown in Fig. 2A is another example of bottom-up systems in culture of cells of biosystems. In Fig. 2A, reference numeral 11 refers to a living tissue, 12 to a neuron, and 13 to a cell. It has already been well-known that both cell systems and neuron systems continuously enlarge and grow with time by autonomous dispersion (R.R. Llinas, The Biology of the Brain, p. 94, W.H. Freeman & Company, NY, 1989).

As shown in Fig. 2B, in bottom-up structures characterized by the nature of autonomous decentralized systems, the individual subsystems/portions automatically form structures according to Lhe local rules/interactions. Therefore, time is projected into the structure continuously. In this case, in a bottom-up structure like vesical epidemic cells having a two-dimensional extension similar to that of Fig. 1A, causality exists in the plane (we call this in-plane causality). As S. Wolfram has shown by using a cellular automaton, there are four different types I to IV (constant, periodical (nested), functionally structured and random) as formation of structures (S. Wolfram, A New Kind of Science, pp. 51-81, Wolfram Media Inc., IL, USA, 2002). In the bottom-up systems, since formation of structures follows local rules/interactions and has no particular directions from the global viewpoint, the spatial configurations usually become, in general, isotropic. In this case, the entire structure is determined by intrinsic factors according to the generation rule. Changes of structures exhibit a smooth continuous line relative to time, i.e., time is projected continuously into structure.

Thus, bottom-up systems are in general at least within an intermediate range isotropic (undirectional) structures to which time is projected continuously. Therefore, according to the above notation, they can be expressed as (time projectivity, spatial directionality) = $(\uparrow,\uparrow)$.

In general, living matters or life forms adequately combine the bottom-up property based upon the body systemizing property governed by genes and the top-down property based upon governability by brains to realize their integration as a whole. More specifically, the living matters integrate the bottom-up capability in formation of body tissues and the top-down capability by brains by attaching neuron system to cells in the growth of individuals from fertilized eggs through the long course of evolution.

That is, as shown in Fig. 2B, an aggregation of cells experiencing a bottom-up growth enables access to every sites because of the existence of the network, i.e. the neuron system, and commands, controls and information extraction from the brain are executed through the neuron system. It is essential for the living matters as self-organized bodies to have associated neuron systems.

On the other hand, to operate systems effectively, control systems must effect information transfer and controls with much smaller "volumes" than controlled systems. Biosystems can be regarded to attach neuron systems, which are $1+\alpha$ (where $0<\alpha<1$) fractal-dimensional strings, to three-dimensional cell systems. The dimension of transfer and control systems must be always smaller than the dimension of cell systems. The neuron systems are distributed in a three-dimensional development in living matters.

Thus, the living matters integrate different kinds of three-dimensional bottom-up systems called cell systems by so-called minimum set-up through bottom-up, self-similar, lower-dimensional structures called neuron systems to which the lapsed time from generation of fertilize eggs is projected continuously.

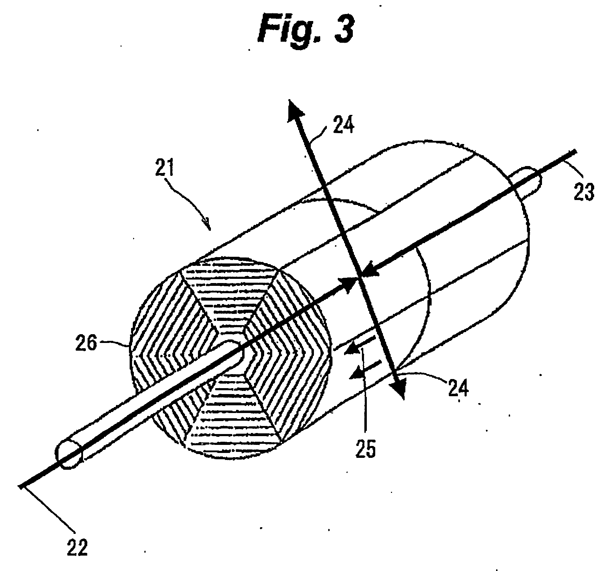

In an artificial system other than the aforementioned living matters, there is a TPC shown in Fig. 3 as a system using continuous projection of the lapsed time on spatial coordinates in the minimum setup including a drum-like container and a gas filling the container, although it is not a rigid solid system. Its development and excellent performance have been reported by the Inventor, et al. (P. Nemethy, P. Oddone, N. Toge, and A. Ishibashi, Nuclear Instruments and Methods 212 (1983)273-280).

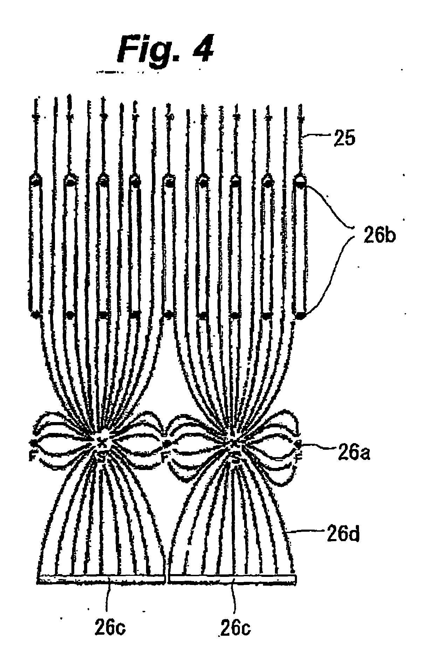

This TPC is explained here in greater detail. As shown in Fig. 3, electron beam 22 and positron beam 23 entering from opposite ends of a gas-contained cylindrical TPC 21 collide with each other and generate a jet of new elementary particles 24. Electrons 25 generated along trajectories of the elementary particles 24 reach two-dimensional detectors called sectors 26 at opposite ends of the TPC 21 at a constant drift velocity in the axial direction. Therefore, positions in the axial direction, i.e. in the z direction, are known from lapsed time to arrival at the sectors 26 from the time of collision. Fig. 4 is an enlarged view of the sector 26. Reference numeral 26a refers to sense wires, 26b to grids, 26c to pads and 26d to electric flux lines. As shown in Fig. 4, electrons induce avalanche at the portion of sense wires 26a, and thereby apply electric signals to the sense wires 26a and the underlying pads 26c. Thus, the positions in the x and y directions are determined. In a three-dimensional position thus determined, the position in the z direction projects time information to the space as explained before due to the drift velocity of electrons being constant. Because of this feature, the system is called time projection chamber, and makes an example demonstrating usefulness of the concept of time projection into space.

In the sector 26, states between the sense wires 26a and the pads 26c are read out. That is, a kind of information read is conducted, and it can be regarded as local addressing. The same operation takes place even when wires are placed in a close crossing relation, for example, instead of the pads 26c. Fig. 4 clearly demonstrates how the electric field concentrates near minute electrodes in form of sense wires 26a. The use of thin sense wires 26a is desirable to generate intensive electric field. Thus, TPC has two important features, projection of time to space and concentration of electric field (and accompanied signal amplification) at crossing points of thin structures.

Silicon LSI demonstrating a development along a road map represented by the Moore's law is one of representative of so-called top-down devices and systems, and its limits in size, operation power (environmental temperature) and investment to manufacturing facilities are being talked about. However, while no fundamental solutions are found, the device is anticipated to encounter such limits in a near future.

Bottom-up schemes are being remarked as the antithesis of top-down schemes, but their most serious difficulty is impossibility of or severe difficulty in individual addressing.

In nanoscale, both a function derived from living matters and a function not derived from living matters can be reduced to a common interactive mechanism (ultimately to an electromagnetic interaction). Therefore, nanotechnologies making remarkable progress contains latent importance of integrating non-living matters and living matters, but they have not yet been brought into full-scale practical unification or union.

Manufacturing methods of microstructures on the extension of conventional techniques include those using EUV or electron beam lithography and so-called bottom-up schemes using molecules, for example. However, there are no devices and systems that can couple them and try to find out synergy by the coupling. This is because, according to the above-introduced notation regarding the time-wise and space-wise characteristics, the bottom-up systems expressed by (time projectivity, spatial directionality) = $(\uparrow,\uparrow)$ and the top-down systems expressed by (time projectivity, spatial directionality) = $(\downarrow,\downarrow)$ have opposite natures, t versus $\downarrow$, and it is difficult to find a contact point between them when just straightforwardly put side-by-side, just like incompatibility of oil and water.

Coupling of the nanoscale world and the macroscopic world is the barrier that engineers must break through to couple new effects or functions that will be obtained in future in the field of nanotechnologies to existing silicon-based IT infrastructures and educing synergies. However, it is believed that no one could make satisfactory success in coupling them.

Bottom-up material systems expected to exhibit high potency through nanotechnologies have no scheme enabling individual addressing in such nanoscale, and they have not been brought into systematic practical use.

In artificial bottom-up systems, no one made success in providing a control line accompanying the main body of a bottom-up system, which corresponds to neurons connecting the brain and body tissues. This might have made it difficult heretofore to couple the top-down and bottom-up systems.

The above-explained TPC is a system similar to the neuron system of a living matter in that it has time continuously projected and partly satisfying its feature of growing with time to distribute its structure in a three-dimensional development and making access. It has two important features, namely, continuous time projectivity based upon a constant drift velocity of electrons and three-dimensional access to the entire system, based on signal amplification at crossing points of thin conductive structures. However, since this TPC contains gas inside, it has not been made up as a complete solid device.

As already explained, for the conventional manufacture of two-dimensional structures such as semiconductor integrated circuits (such as memory devices) in the group of top-down systems, patterning by photo-lithography through batch exposure as shown in Fig. 1A is used. In this case, resolution is required in both x and y directions. The accuracy is about 70 nm in the manufacturing level and several nm in the laboratory champion data even in the case of the currently maximum resolution. Furthermore, this accuracy has not been attained for the entire bulk size.

Further, useful and interesting physical phenomena have been observed, such as surface enhancement effect by plasmon excitation observed in a local space between a two-dimensional sample plane and an opposed probe (Futamata, et al., Spectroscopical Society of Japan, Lecture Symposium 2002 Spring "The Forefront of Microscopic Vibration Spectroscopy" Lecture Papers, pp.20-23). There are no systems arranging nanostructures capable of taking charge of such physical phenomena in multiply parallel throughout the bulk size of mm~cm. That is, there are no substances forming nano-discrete bulk-sized structures having dense architectures of nanoscale and enabling individual access.

The above problems can be solved by preparing a coupling intermediate layer or a coupling platform having a nature corresponding to the nature of soap that couples oil and water (amphiphilic property) or a neuron system that couples a cell system and a brain system, and more particularly, by making a configuration in which a bottom-up system and a top-down system are coupled by an artificial neuron-equivalent system.

More specifically, the problems can be solved by inserting a system having the nature of (time projectivity, spatial directionality) = $(\uparrow,\downarrow)$ as the third structure between a bottom-up system of (time projectivity, spatial directionality) = $(\uparrow,\uparrow)$ and a top-down system of (time projectivity, spatial directionality) = $(\downarrow,\downarrow)$. For this purpose, an accompanying line corresponding to a neuron system is provided in an artificial bottom-up system. Alternatively, a self-organized system is grown near an accompanying system prepared beforehand.

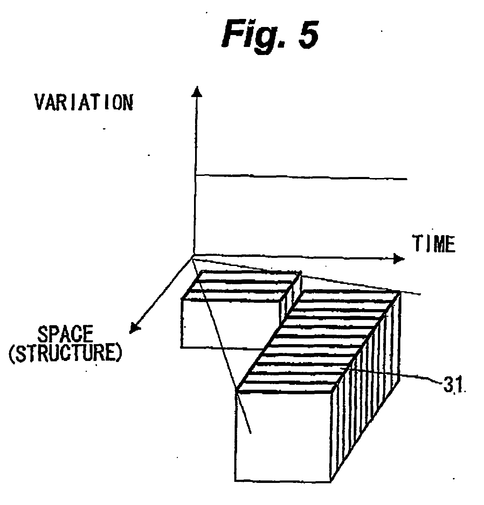

As shown in Fig. 5, growth of a one-dimensional superlattice 31 is brought about with time projected. Since the spatial coordinate in the growth direction of the one-dimensional superlattice 31 exhibits the flow of time directly, this can be regarded as a system in which time is projected continuously to the spatial structure along the growth direction. By using a controlled growth rate, or more preferably, a constant growth rate, the spatial structure is controlled continuously by time (coordinate). In addition, the spatial structure is generally anisotropic in that there exists a specific direction as the growth direction.

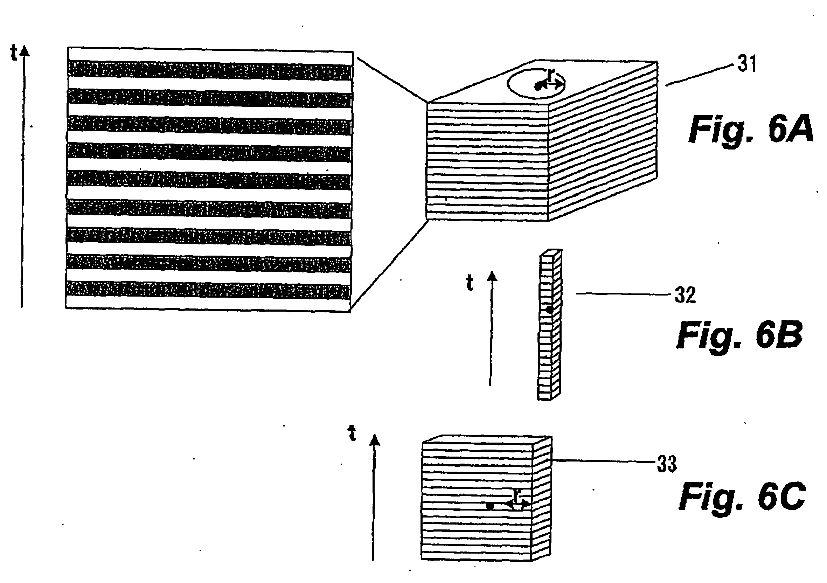

The one-dimensional superlattice 31 grown in this manner is processed into thin pieces. Its significance lies in the following points. Fig. 6A shows the one-dimensional superlattice 31. Fig. 6B shows a superlattice wire 32 processed from the one-dimensional superlattice 31. Fig. 6C shows a superlattice thin piece 33 processed from the one-dimensional superlattice 31. As shown in Figs. 6A, 6B and 6C, the one-dimensional superlattice 31 certainly has a structure weaving time t therein into the growth direction. However, to access time (equals a point on the axis in the growth direction), even with designation of distance r, there are infinite in-plane coordinates (Fig. 6A). In the case where the one-dimensional superlattice 31 is processed into a wire, when time (equals a point on an axis in the growth direction) is designated, the portion, which is a quantum dot, cannot be accessed from other points (Fig. 6B). In contrast, in the case where the one-dimensional superlattice 31 is processed into a thin piece, the position can be determined definitely, and another point (spot) distant by r is determined definitely and can be accessed from there through the lateral line (Fig. 6C). Thus, by processing the one-dimensional superlattice 31 into a thin piece, a system having the nature of $(\uparrow,\downarrow)$ can be realized.

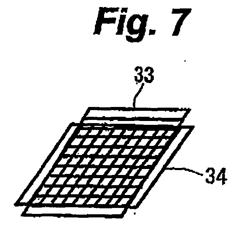

Further, as shown in Fig. 7, the two-dimensional superlattice thin piece 33 is superposed on another similar superlattice thin film 34, or vice versa, with a difference in orientation by an angle, for example, 90 degrees. By stacking two superlattice thin pieces, quasi (discrete) isotropy is recovered, and a cartesian coordinate is formed simultaneously. Thereby obtained is a scheme permitting access to a space discretely as well as densely in nanoscale. With this, a mechanism corresponding to a neuron system that individually addresses an entirely continuous arbitrary(2-dimensional) bottom-up system can be made artificially.

While the bottom-up system shown in Figs. 2A and 2B has a isotropic (non-directional) structure on which time is continuously projected (let it be a first structure) and the top-down system shown in Figs. 1A and 1B has an anisotropic (directional) structure on which time is projected discontinuously (let it be a second structure), the structure shown in Fig. 7 has their in-between nature, and exhibits an anisotropic configuration on which time is projected continuously (let it be a third structure). That is, the third structure shares the time continuity with the bottom-up system and shares the spatial anisotropy with the top-down system. Therefore, the third structure has good affinity to both the bottom-up system and the top-down system, and can couple or unite the two structures (which have therefore not been coupled heretofore), one having time continuous projectivity and spatial isotropy, i.e. the nature of (t,t) and the other having time discontinuous projectivity and spatial anisotropy, i.e. the nature of (↓,↓).

Moreover, as shown in Fig. 7, the third structure by piling/overlaying two thin superlattice pieces can recover discrete isotropy (quasi-isotropy) and can fully access to a bottom-up system in a two dimensional mode.

Furthermore, as already explained, although two-dimensional structures in the category of the top-down systems, such as semiconductor integrated circuits, which rely on patterning by batch exposure, are required to satisfy a good resolution in both x and y directions, and the accuracy remains several nm even in the current maximum resolution, the portion of the third structure can have the resolution of an atomic layer because it is formed by the technique that projects time to space as manifested in vacuum deposition technique. Therefore, even when the bottom-up portion is composed of units of a molecular level size, individual access to them is possible in the present invention.

As a technique for overcoming the limit of resolution in the conventional lithography, the use of self-organization is being examined. For example, in two-dimensional memory using quantum dots and simple molecules made by self-organization, layout with accuracy in the order of several angstroms is possible. However, there are no ways to independently access to these self-organized microstructures. Trial to external access by metal wire, for example, which is made by lithography, will not satisfy the requirement of resolution as already explained.

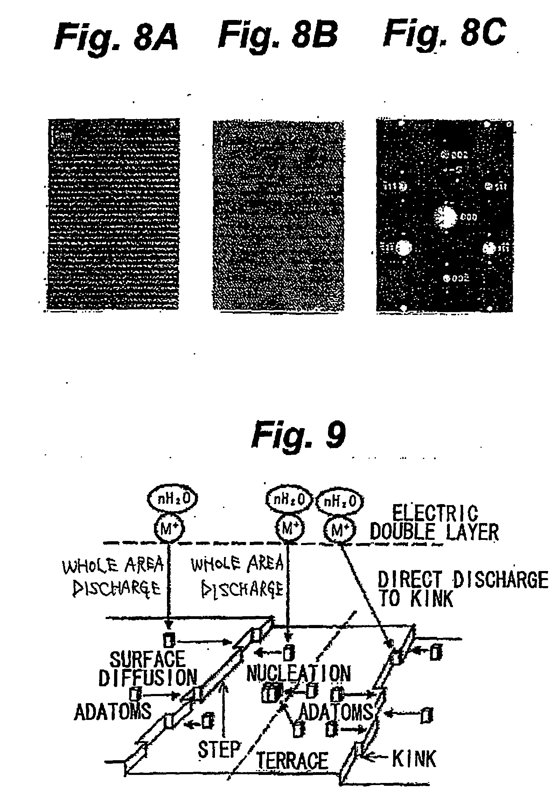

That is, conventional lithography used in top-down systems cannot attain resolution in the order of one atomic layer, and independent access is impossible by the use of bottom-up systems alone (even though resolution might be acceptable). However, by using a structure prepared by forming a block structure controlled in growth rate of one-dimensional superlattice and projecting time to space, then processing it into thin pieces and minimizing the freedom of directionality, like the aforementioned superlattice thin piece 33, it is possible to complementarily couple top-down systems and bottom-up systems and thereby accomplish both resolution in the order of inter-atomic spacing and independent one-to-one access. As already reviewed, the Inventor formerly reported that resolution of one atomic layer can be obtained in the growth direction in growth of AlAs/GaAs two-atomic layer superlattice by MOCVD method as shown in Figs. 8A through 8C (A. Ishibashi, MOCVD-grown Atomic Layer Superlattices, Spectroscopy of Semiconductor Microstructures, eds. G. Fasol, A. Fasolino, P. Lugli, Plenum Press, NY, 1989). Figs. 8A, 8B and 8C show a dark field image, lattice image and diffraction pattern by transmission electron microscope (TEM), respectively.

As already discussed, growth mechanism by MOCVD essentially comprises surface diffusion and kink growth like electrochemical growth mechanism shown in Fig. 9 (Shiro Haruyama, Electrochemistry for Surface Engineers, p. 112, Maruzen, Tokyo, 2001). Therefore, it is possible to grow one-dimensional superlattice as a function of time by using the electrochemical technique as well. That is, the one-dimensional superlattice directly expressing a continuous flow of time as shown in Fig. 6A can be grown by using the electrochemical technique, and spatial structure can be controlled by continuous time coordinates. As compared with the control of spatial structure at discrete points on a time axis, such as batch exposure, development and etching shown in Figs. 1A and 1B, improvement of resolution by one or more digits is possible.

Therefore, the above method can form a fine, discrete and dense repeated structure, such as a repeated structure of metal or other conductor strips and dielectric elements, with atomic layer accuracy.

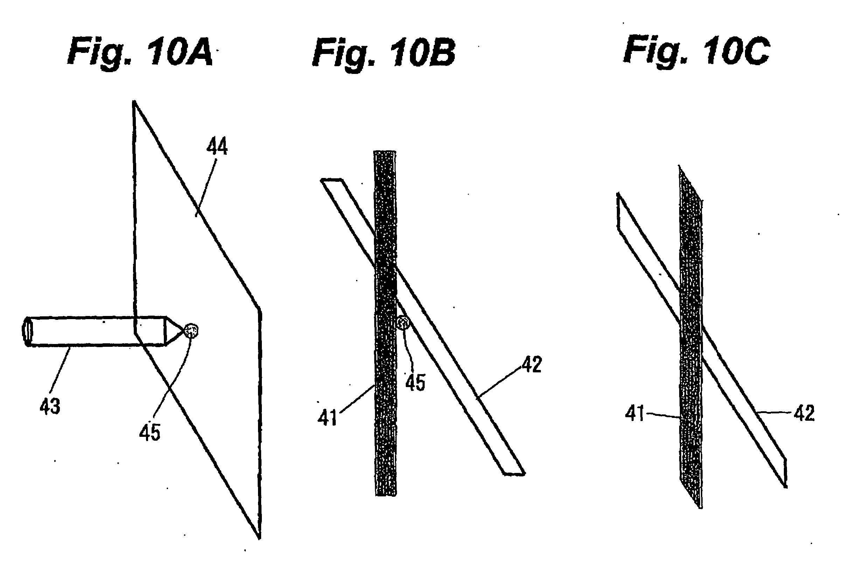

In the case of forming the third structure in form of such a repeated structure of conductor strips and dielectric elements, it is desirable that the conductor strips 41, 42 intersect to oppose their knife edges to each other and make a very small area at the intersection (edge-to edge configuration) as shown in Fig. 10B rather than opposing their planes to each other to make a large area at the intersection (face-to-face configuration) as shown in Fig. 10C. In case of Fig. 10B, thickness of the conductor strips 41, 42 is in the order of 1-10 nm, for example. In this case, thickness of the dielectric element isolating the conductor strips 41 or conductor strips 42 is in the order of 10~100 nm, for example. In Fig. 10B, reference numeral 45 denotes a pseudo zero-dimensional space (quantum cross) in the order of 1~10nm, for example. Why the configuration of Fig. 10B is desirable is explained below.

Fig. 10A shows a layout of SPM (surface probe microscope) proved to exhibit surface strengthening effect by a local electric field, in which the tip of a probe 43 is positioned close to the surface 44 (two-dimensional plane) of a sample. Spatial distributions of potential in a nanospace is calculated for different cases of Fig. 10A and Fig. 10B, respectively.

In case of Fig. 10A, can be calculated by regarding that probes are opposed to each other, while taking mirroring effect into account. In this setup, distance between probes equals the distance between the conductor strips 41 and the conductor strip 42 in Fig. 10B at their intersection for comparison purposes. Assuming here that a metallic structure exists in a vacuum and Lhe potential ot the metal portion is set from outside, then spatial electric charge is zero, and the Poisson equation to be solved here is simplified to the Laplace equation,

$$(\partial^2/\partial x^2 + \partial^2/\partial y^2 + \partial^2/\partial z^2)\phi(x,y,z) = 0 \qquad\qquad (1)$$

When the space is divided to meshes (distance $\Delta$) and expressed by a differential equation, for the potential $\phi(i,j,k)$, calculation progresses as follows.

$$\partial\phi(i,j,k)/\partial x = (\phi(i,j,k)-\phi(i-1,j,k))/\Delta$$

$$\partial\phi(i,j,k)/\partial y = (\phi(i,j,k)-\phi(i,j-1,k))/\Delta$$

$$\partial\phi(i,j,k)/\partial z = (\phi(i,j,k)-\phi(i,j,k-1))/\Delta$$

For example, regarding x, calculation progresses as follows.

$$\partial^2\phi/\partial x^2 = (\phi'(i+1,j,k)-\phi'(i,j,k))/\Delta$$
$$= ((\phi(i+1,j,k)-\phi(i,j,k))/\Delta-(\phi(i,j,k)-\phi(i-1,j,k))/\Delta)/\Delta$$
$$= (\phi(i+1,j,k)+\phi(i-1,j,k)-2\phi(i,j,k))/\Delta^2$$

Similarly, when $\partial^2\phi/\partial y^2$ and $\partial^2\phi/\partial z^2$ are calculated and introduced for substitution into Equation (1), it is rewritten to:

$$0 \approx (\phi(i+1,j,k)+\phi(i-1,j,k)-2\phi(i,j,k))/\Delta^2$$
$$+ (\phi(i,j+1,k)+\phi(i,j-1,k)-2\phi(i,j,k))/\Delta^2$$
$$+ (\phi(i,j,k+1)+\phi(i,j,k-1)-2\phi(i,j,k))/\Delta^2$$

From the above, solution of the Laplace equation is obtained by revolving the following recurrence formula.

$$\phi(i,j,k)=(\phi(i+1,j,k)+(\phi(i-1,j,k)$$
$$+ (\phi(i,j+1,k)+\phi(i,j-1,k)+\phi(i,j,k+1)+\phi(i,j,k-1))/6$$

$$(2)$$

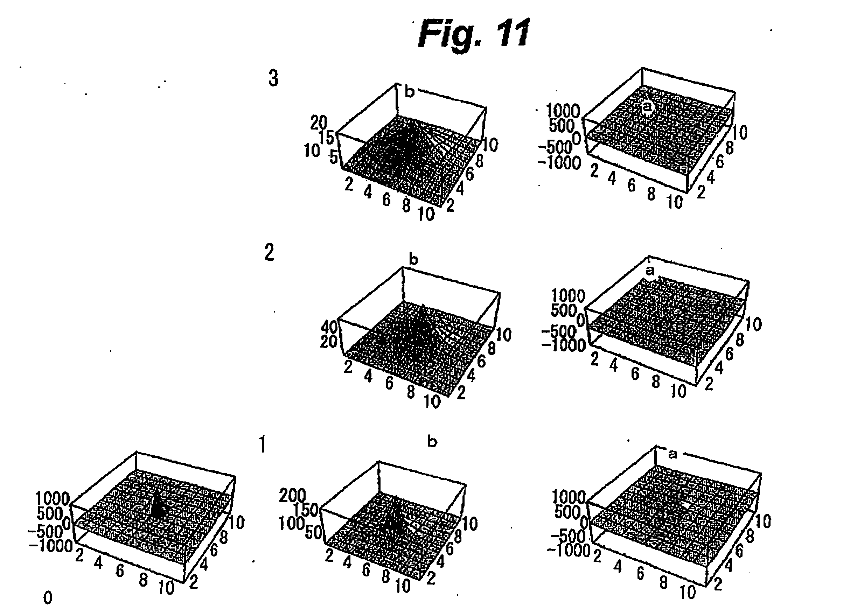

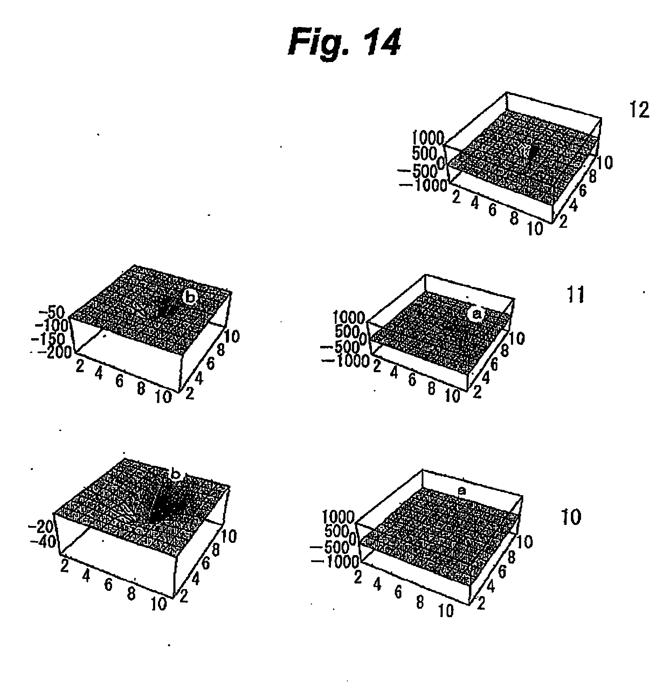

By progressing the calculation by using Equation (2) and introducing the boundary conditions for the configuration of Fig. 10A, potential distributions shown in Figs. 11 through 14 are obtained. In Figs. 11 through 14, numerals 1 through 12 represent spatial coordinates between the tips of the probes, among which 0 and 12 are positions of the probe tips. In Figs. a of Figs. 11 through 14, the z-axis is fixed in the full scale 1000 (arbitrary unit). In Figs. b, the vertical axis is drawn by conducting scaling depending upon the potential level.

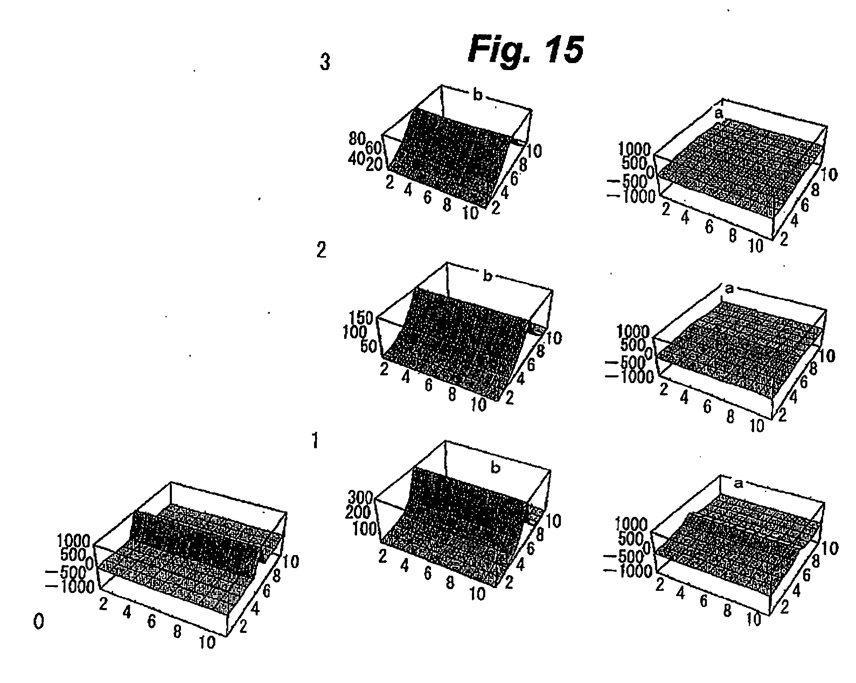

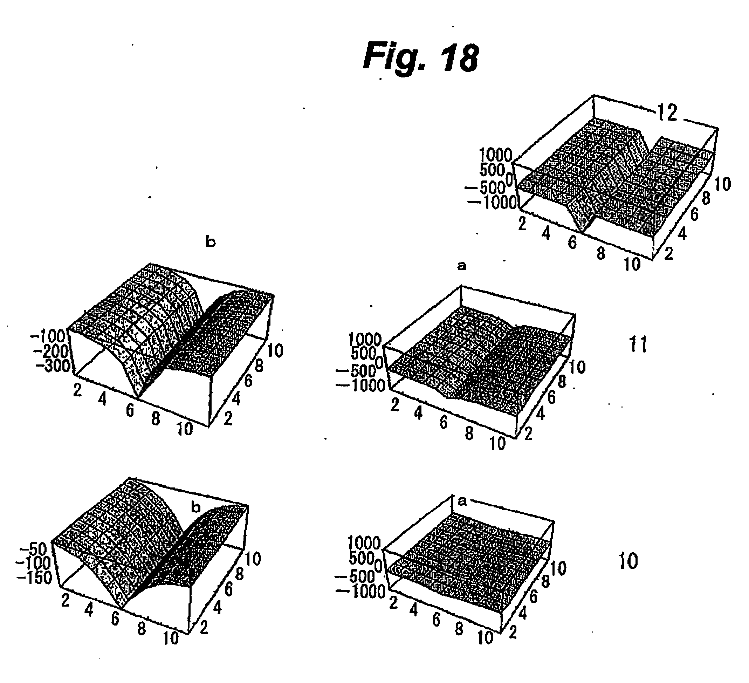

Similarly, calculation is conducted for the case of Fig. 10B where knife edges of the conductor strips 41, 42 are opposed to each other, potential distributions shown in Figs. 15 through 18 are obtained. In Figs. 15 through 18 as well, numerals represent spatial coordinates between knife-edges of the conductor strips 41, 42, and numerals 0 and 12 are positions of the tips of the knife-edges. In addition, like the above explanation, the z axis is fixed in the full scale 1000 (arbitrary unit) in Figs. a of Figs. 15 through 18, In Figs. b, the vertical axis is drawn by conducting scaling depending upon the potential level.

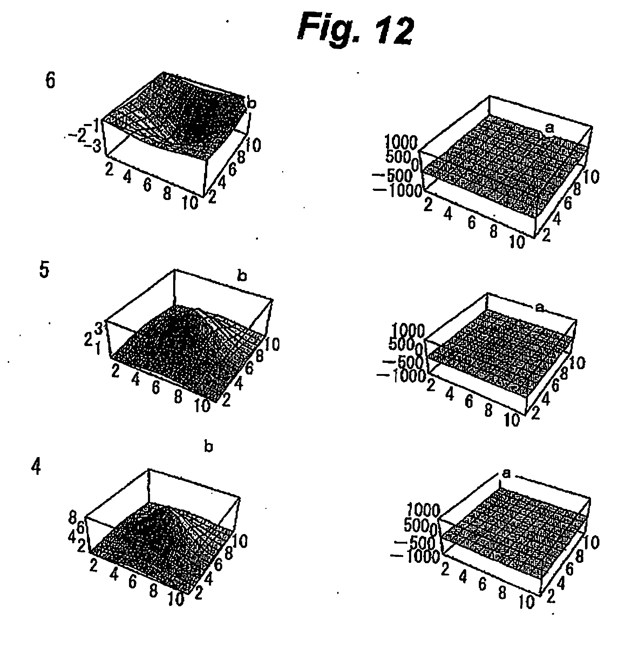

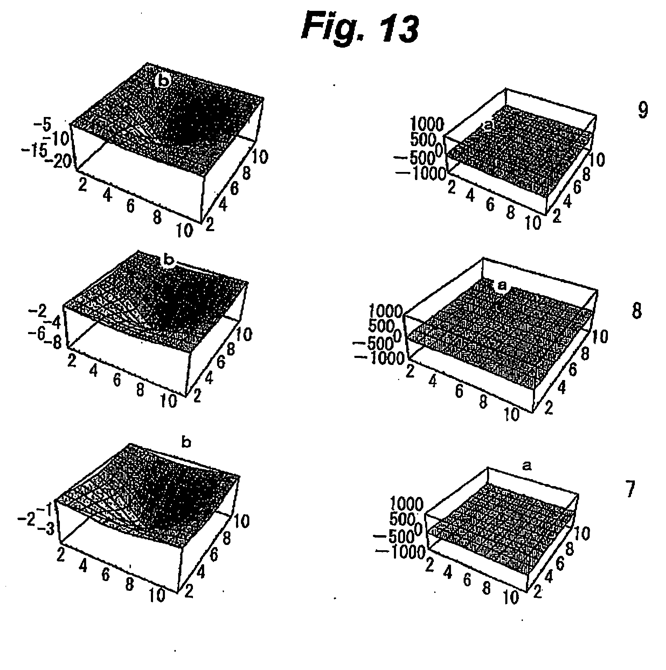

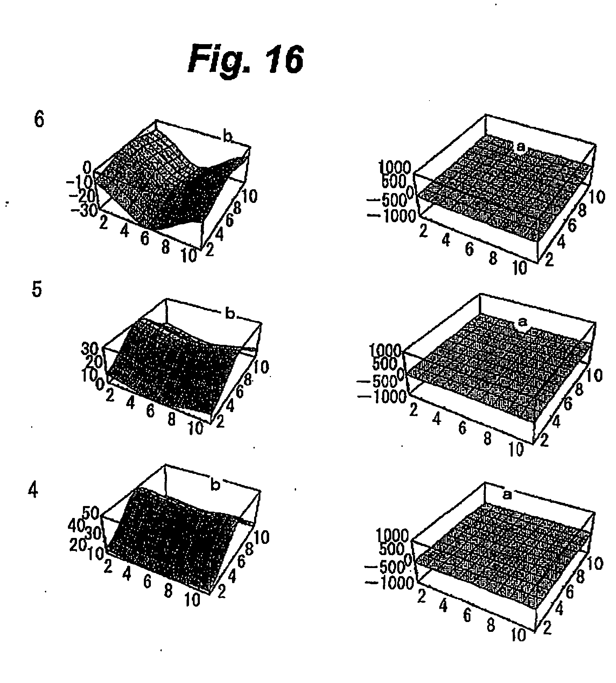

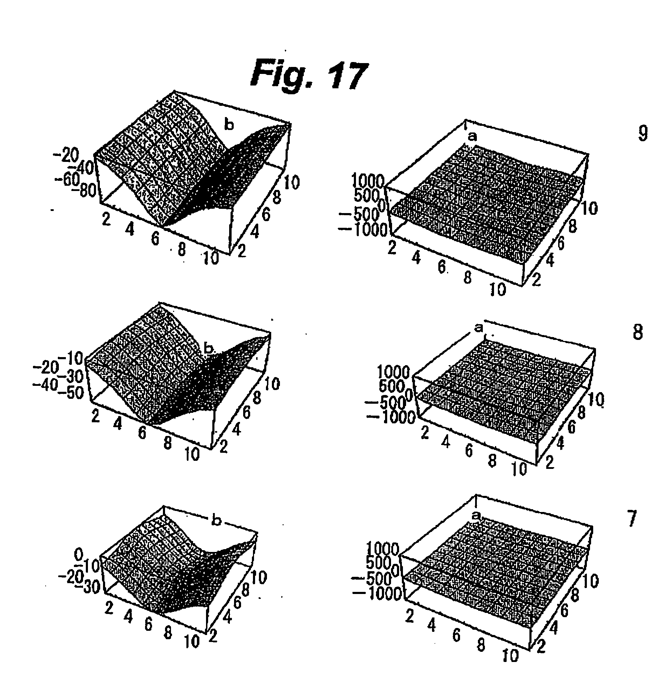

By comparison between Figs. 11 through 14 and Figs. 15 through 18, analogous potential changes, i.e. sharp changes in electric field, are recognized near intermediate points both in the case shown in Fig. 10A and in the case shown in Fig. 10B, reflecting that the cross-sectional area of the intersection is zero dimension. However, through comparison between the amount of change from No. 5 of Fig. 12 to No. 7 of Fig. 13 and the amount of change from No. 5 of Fig. 16 to No. 7 of Fig. 17, it is suggested that the change in electric field per unit length is larger and more quantum effect can be induced even by application of a common potential in the configuration where knife-edges of the conductor strips 41, 42 are opposed to and intersecting with each other than in the configuration where the probe tips are opposed to each other.

As shown in Figs. 11 through 14, the potential between the opposed probes is symmetrical along the axis connecting the tips of the probes (in the vertical direction in the drawings), and rotationally symmetrical about the axis. In contrast, in the crosswise intersecting configuration of the knife-edges, the potential exhibits a unique shape similar to a saddle point at around middle point as shown in Figs. 16 and 17. That is, the potential is asymmetric vertically, and has both a two-fold symmetry and constancy against symmetrical operation of $\pi/4$ revolution plus up and down reversal. In other words, the potential has $D_{2d}$ symmetry. These features can be used as good tools for inducing new quantum functions by controlling the configuration of molecules inserted at crosswise intersections and the charging symmetry. Additionally, if the intersection angle is shifted from 90 degrees, breakdown to $D_2$ symmetry is possible.

Further, in the structure shown in Fig. 6C or Fig. 7, if the one-dimensional superlattice 31 is a periodical structure of conductive layers and dielectric layers, and sufficiently reduced in thickness of the conductive layers, the structure shown in Fig. 10B and potential distributions shown in Figs. 15 through 18 can be obtained apparently.

As a result, in the third structure mentioned above, the sites that will induce surface enhancement effect can be aligned in super-densely parallel. One of the greatest merits of this configuration lies in using no movable portions, absolutely unlike a configuration with densely parallel surface probes making a structure with an array of a number of heads of surface probe microscopes. In addition, by using thin superlattice pieces as thin as 1~100 $\mu$m, it is possible to make the conductor strips 41, 42 extremely narrow and to maintain both high conductivity of the conductor strips 41, 42 and surface evenness of the thin pieces.

For example, if a piece of bottom-up substance is provided at the pseudo zero-dimensional space 45 at the intersection between the conductor strips 41, 42 shown in Fig. 10B, it is also possible to obtain new functions by using the conductor strips 41, 42 making the x and y crossing system in the third structure as an artificial neuron-equivalent system and coupling a conventional silicon LSI system, for example, located outside the third structure and the bottom-up substance (for example, Japanese Patent Laid-open Publication No. JP2000-216499 and Pamphlet of International Publication No. WO02/35616).

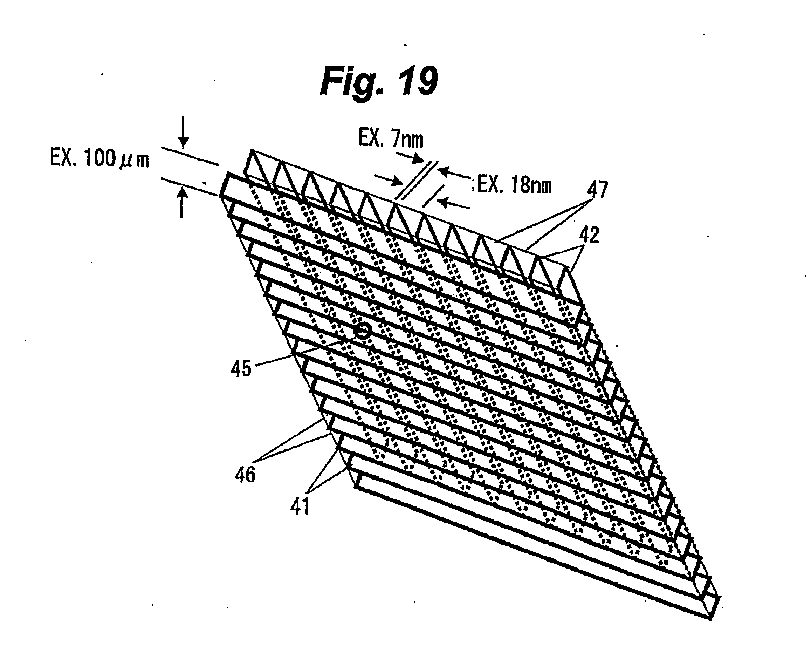

Conductor strips/ribbons 41, 42, and conductor lines in general, use electrons as the medium. Therefore, interaction is transmitted very quickly. On the other hand, the speed of changes in the bottom-up region, and more particularly, the speed of the change in configuration of atoms (such as changes in position of functional groups) are considerably slow because of a large inertial mass. Usually, there is a difference by one or more orders of magnitudes (in general, by several orders of magnitudes) between the speeds of those both. Therefore, the structure shown in Fig. 19, which is an example realizing the configuration conceptually shown in Fig. 7 by using real substances, is a bulk-sized space-time system dispersed in nanoscale, and can deal with atoms and molecules sandwiched at intersections of individual conductive lines as well as electrons (or holes) flowing in the lines in a adiabatic approximation scheme. That is, the structure of Fig. 19 is a combination of two superlattice thin pieces composed or alternating heterlayers of metals and dielectric materials. The two pieces/slices are stacked together to be different in orientation by 90 degrees, and a (two-dimensional) bottom-up system is sandwiched by the two slices. The conductor strips 41, 42 are isolated by dielectric layers 46, and the conductor strips 42 are isolated by dielectric layer 47. Fig. 19 shows exemplary sizes of respective portions corresponding to storage density 1Tb/in$^2$ in case the system is used as memory.

Interaction of atomic groups and molecular groups normally propagates like ripples through nearest neighbor groups in nearest neighbor interaction. In the system of Fig. 19, however, atoms and molecules exchange interactions instantaneously through the conductive lines, with a good approximation as if it were the interaction at distance. Since it is one of essentials of the critical state that the system "knows" every inch thereof, the system of Fig. 19 may be appreciated as a new substance akin to the "critical state" unlike conventional substances (such as, for example, cellular automaton that is a discrete system in contrast to a continuous system (see, for example, S. Wolfram, A New Kind of Science, pp. 51-81, Wolfram Media Inc., IL, USA, 2002). Thus, new aspects of nanostructural physics can be brought out through modified self-organized critical phenomena and break of spontaneous symmetry, which are expected to appear in this system. That is, it would be possible not only to couple the microscopic world and the macroscopic world but also to create new quantum functions as well as critical phenomena by aforementioned bulk-sized nanostructures capable of local and individual addressing in a bulk size.

The present invention has been made through the study explained above, and it is supported by the foregoing study and embodiments of the invention explained hereafter.

According to the first aspect of the invention, there is provided a functional device comprising: a first structure formed by local interaction; an anisotropic second structure formed by a predetermined global rule; and a third structure having an anisotropic configuration and coupling or uniting the first and second structures.

According to the second aspect of the invention, there is provided a method of manufacturing a functional device including a first structure and a second structure which are coupled or united via a third structure, comprising:

forming the third structure to have an anisotropic configuration;
forming the second structure according to a predetermined global rule; and
forming the first structure by local interaction.

According to the third aspect of the invention, there is provided a functional system using a functional device which includes: a first structure formed by local interaction with in-plane causality; an anisotropic second structure formed by a predetermined global rule ; and a third structure having an anisotropic configuration and coupling the first and second structures.

In the first, second and third aspects of the invention, the first structure, for example, is formed by autonomous dispersion type interaction, the second structure is formed according to a predetermined global design rule, and the third structure comprises a flat plane or a curved plane having an anisotropic and periodical configuration. Alternatively, the first structure is made of autonomous decentralized system, the second structure is formed according to a predetermined global design rule, and the third structure comprises a plurality of planes stacked in a crossing relation, each having an anisotropic and periodical configuration.

According to the fourth aspect of the invention, there is provided a functional device comprising: an isotropic first structure in which time is projected in the structure continuously; an anisotropic second structure in which time is projected in the structure discontinuously; and a third structure having an anisotropic and periodical configuration and coupling the first and second structures.

According to the fifth aspect of the invention, there is provided a method of manufacturing a functional device including a first structure and a second structure which are coupled via a third structure, comprising:

a step of forming the third structure to have an anisotropic configuration;
a step of forming the second structure to have an anisotropic configuration in which time is projected in the configuration discontinuously; and
a step of forming the first structure to have an isotropic configuration in which time is projected in the configuration continuously.

According to the sixth aspect of the invention, there is provided a functional system using a functional device which includes: an isotropic first structure in which time is projected in the structure continuously; an anisotropic second structure in which time is projected in the structure discontinuously; and a third structure having an anisotropic and periodical configuration and coupling the first and second structures.

In the fourth, fifth and sixth aspects of the invention, the third structure, for example, comprises a plurality of planes stacked in a crossing relation, each having an anisotropic and periodical configuration.

According to the seventh aspect of the invention, there is provided a functional device comprising: an isotropic first structure in which time is projected in the structure continuously; an anisotropic second structure in which time is projected in the structure discontinuously; and an anisotropic third structure in which time is projected in the structure continuously and coupling the first and second structures.

According to the eighth aspect of the invention, there is provided a method of manufacturing a functional device including a first structure and a second structure which are coupled via a third structure, comprising:

a step of forming the third structure to beanisotropic in which time is projected in the configuration continuously;
a step of forming the second structure to beanisotropic in which time is projected in the configuration discontinuously; and
a step of forming the first structure to beisotropic in which time is projected in the configuration continuously.

According to the ninth aspect of the invention, there is provided a functional system using a functional device which includes: an isotropic first structure in which time is projected in the structure continuously; an anisotropic second structure in which time is projected in the structure discontinuously; and an anisotropic third structure in which time is projected in the structure continuously, coupling the first and second structures.

In the seventh, eighth and ninth aspects of the invention, the third structure, for example, recovers pseudo isotropy by sliding the directionality of the anistropic two-dimensional structures in which time is projected continuously, and laminating at least two-dimensional structures.

According to the tenth aspect of the invention, there is provided a functional device comprising: a first structure formed by a bottom-up process; an anisotropic second structure formed by a top-down process; and an anisotropic and periodical third structure coupling the first and second structures.

According to the eleventh aspect of the invention, there is provided a method of manufacturing a functional device including a first structure and a second structure which are coupled via a third structure, comprising:

a step of forming the third structure to be anisotropic and periodic;
forming the second structure by a top-down process; and
forming the first structure by a bottom-up process.

According to the twelfth aspect of the invention, there is provided a functional system using a functional device which includes a first structure formed by a bottom-up process; a second structure formed by a top-down process; and an anisotropic and periodical third structure coupling the first and second structures.

In the tenth, eleventh and twelfth aspects of the invention, the first structure, for example, is formed by a bottom-up process relying on self-organization, the second structure is an integrated circuit (such as semiconductor integrated circuits and/or micro chemical channels circuits) formed by a top-down process, and the third structure recovers pseudo isotropy by stacking in a crossing relation a plurality of anisotropic two-dimensional structures in which time is projected in the structure continuously.

According to the thirteenth aspect of the invention, there is provided a functional device comprising: a first structure having self-similarity or a fractal structure; a second structure in form of an integrated circuit formed by a top-down process; and a third structure having an anisotropic and periodical configuration and coupling the first and second structures.

According to the fourteenth aspect of the invention, there is provided a method of manufacturing a functional device including a first structure and a second structure that are coupled via a third structure, comprising:

a step of forming the third structure to have an anisotropic and periodical configuration;
a step of forming the second structure to have an integrated circuit by a top-down process; and
a step of forming the first structure to have self-similarity or a fractal structure.

According to the fifteenth aspect of the invention, there is provided a functional system using a functional device which includes: a first structure having self-similarity or a fractal structure; a second structure in form of an integrated circuit formed by a top-down process; and a third structure having an anisotropic and periodical configuration and coupling the first and second structures.

In the thirteenth, fourteenth and fifteenth aspects of the invention, the third structure, for example, comprises a plurality of planes stacked in a crossing relation, each having an anisotropic and periodical configuration and. The integrated circuit may be a semiconductor integrated circuit, for example.

In the first to fifteenth aspects of the invention, the third structure may have a configuration laminating at least two thin pieces each having a periodical configuration of conductive layers, each having a thickness in the range from 0.2 nm to 60 nm, more preferably in the range from 0.2 nm to 30 nm, and typically in the order of 1~10 nm, and dielectric layers, each having a thickness in the range from 0.2 nm to 50 $\mu$m, typically in the range from 0.2 nm to 600 nm, and more typically in the order of 10~100 nm, such that the layers cross each other.

The anisotropic structures may have either a single spatial frequency or a plurality of spatial frequencies. Further, each anisotropic structure is a system of substance including different kinds of carriers that are different in characteristic time for propagation of interaction by at least one digit, for example, and take charge of a plurality of interactions or physical phenomena different in nature from each other, and serving as a host concerning a remarked interaction or physical phenomenon, in which a second host substance corresponding to carriers (such as atoms or molecules) characterized in slow interaction or physical phenomenon is dispersed discrete by a first host substance corresponding to carriers (such as electrons) characterized in quick interaction time or physical phenomenon time in the order of 1 nm to 100 nm scale (for example, from 0.2 nm to 600 nm). In this case, at least one portion of the first host substance, for example, coupled to an arbitrary position inside the entire system exists on a one-dimensional line or curve encircling the system, or it is exposed.

In case of using a repetitive lamination of conductive layers and dielectric layers as the third structure, dielectric layers in contact with conductive layers at opposite ends may be either identical or different in nature.

In a typical example, a second structure in form of an integrated circuit (like a semiconductor integrated circuit) manufactured by a top-down process couples to a combination of a first structure and a third structure with a linear or curved one-dimensional structure existing along an edge of the combination as an interface region.

According to the sixteenth aspect of the invention, there is provided a functional material made by stacking at least three layers of third structures defined in the first, fourth, seventh, tenth and thirteenth aspects of the invention.

According to the seventeenth aspect of the invention, there is provided a functional material made by stacking at least two layers of laminations each including a first structure and a third structure defined in the first, fourth, seventh, tenth and thirteenth aspects of the invention.

According to the eighteenth aspect of the invention, there is provided a functional device comprising a structure made by stacking at least two thin pieces each being a periodical configuration of strip-shaped conductive layers and dielectric layers such that the layers cross each other and edges of the conductive layers are opposed to each other.

According to the nineteenth aspect of the invention, there is provided a functional material comprising a structure made by stacking at least two thin pieces each being a periodical configuration of strip-shaped conductive layers and dielectric layers such that the layers cross each other and edges of the conductive layers are opposed to each other.

According to the twentieth aspect of the invention, there is provided a functional device comprising a lamination of at least two thin pieces each having a periodical configuration of strip-shaped conductive layers, each having a thickness in the range from 0.2 nm to 60 nm, and dielectric layers, each having a thickness larger than the thickness of each said conductive layer, such that the layers cross each other and edges of the conductive layers are opposed to each other.

According to the twenty-first aspect of the invention, there is provided a functional material comprising a lamination of at least two thin pieces each having a periodical configuration of conductive layers, each having a thickness in the range from 0.2 nm to 60 nm, and dielectric layers, each having a thickness larger than the thickness of each said conductive layer, such that the layers cross each other and edges of the conductive layers are opposed to each other.

In the twentieth and twenty-first aspects of the invention, thickness of each conductive layer is preferably in the range from 0.2 nm to 30 nm, and thickness of each dielectric layer is generally in the range from 0.2 nm to 200 $\mu$m and typically in the range from 0.2 nm to 50 $\mu$m.

According to the twenty-second aspect of the invention, there is provided a functional device comprising an anisotropic structure which is a system of substance including different kinds of carriers which are different in characteristic time for propagation of interaction by at least one digit, for example, and take charge of a plurality of interactions or physical phenomena different in nature from each other, and serving as a host concerning a remarked interaction or physical phenomenon, in whcih a second host substance characterized in slow interaction or physical phenomenon is dispersed discrete by a first host substance characterized in quick interaction time or physical phenomenon time in the order of 1 nm to 100 nm scale.

According to the twenty-third aspect of the invention, there is provided a method of manufacturing a functional device including an anisotropic structure which is a system of substance including different kinds of carriers which are different in characteristic time for propagation of interaction by at least one order of magnitudes, for example, and take charge of a plurality of interactions or physical phenomena different in nature from each other, and serving as a host concerning a remarked interaction or physical phenomenon, in which a second host substance characterized in slow interaction or physical phenomenon is dispersed discrete by a first host substance characterized in quick interaction time or physical phenomenon time in the order of 1 nm to 100 nm scale.

According to the twenty-fourth aspect of the invention, there is provided a functional system using a functional device including an anisotropic structure which is a system of substance including different kinds of carriers which are different in characteristic time for propagation of interaction by at least one order of magnitudes, for example, and take charge of a plurality of interactions or physical phenomena different in nature from each other, and serving as a host concerning a remarked interaction or physical phenomenon, in which a second host substance characterized in slow interaction or physical phenomenon is dispersed discrete by a first host substance characterized in quick interaction time or physical phenomenon time in the order of 1 nm to 100 nm scale.

In the sixteenth to twenty-fourth aspects of the invention, the description made in conjunction with the first to fifteenth aspects of the invention is also applicable to the extent consistent with their natures.

According to the invention having the configuration summarized above, it is possible to easily integrate a top-down system and a bottom-up system, which have been difficult to integrate heretofore, by coupling a first structure formed by local interaction and a second structure formed according to a predetermined global rule with a third structure having an anisotropic configuration.

Brief Description of the Drawings

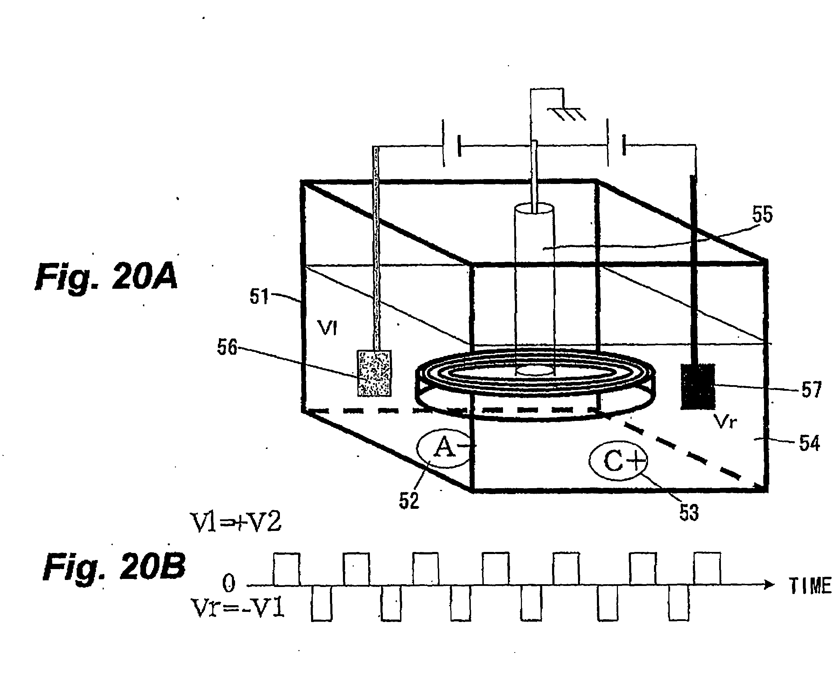

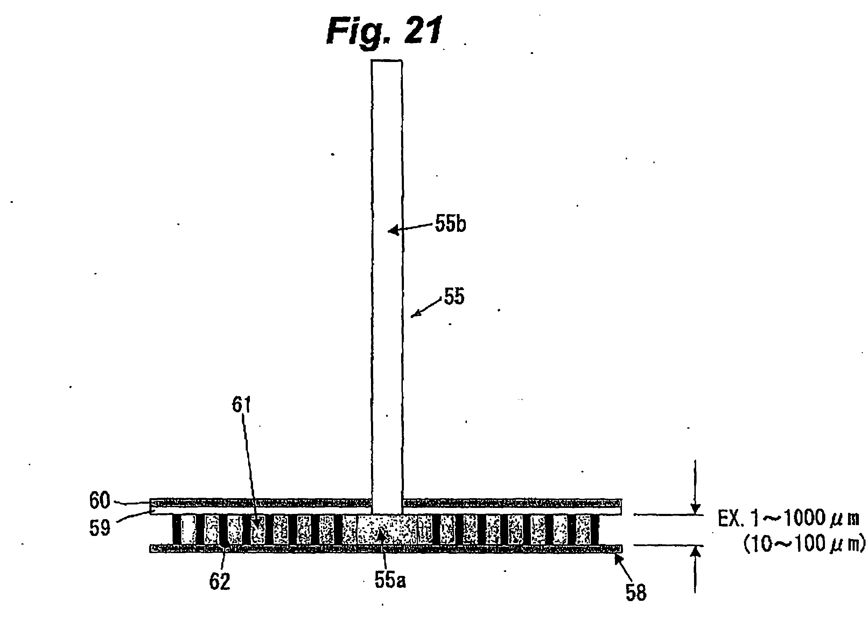

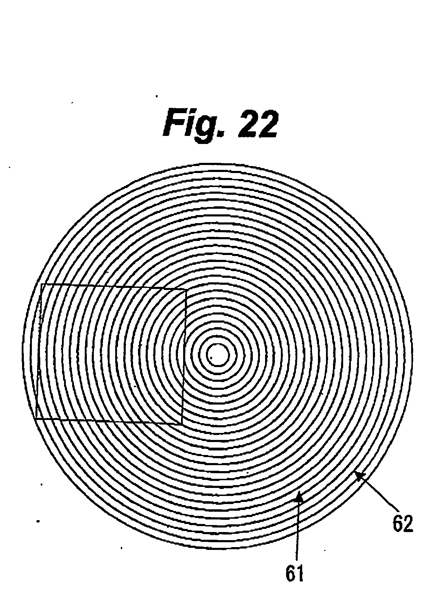

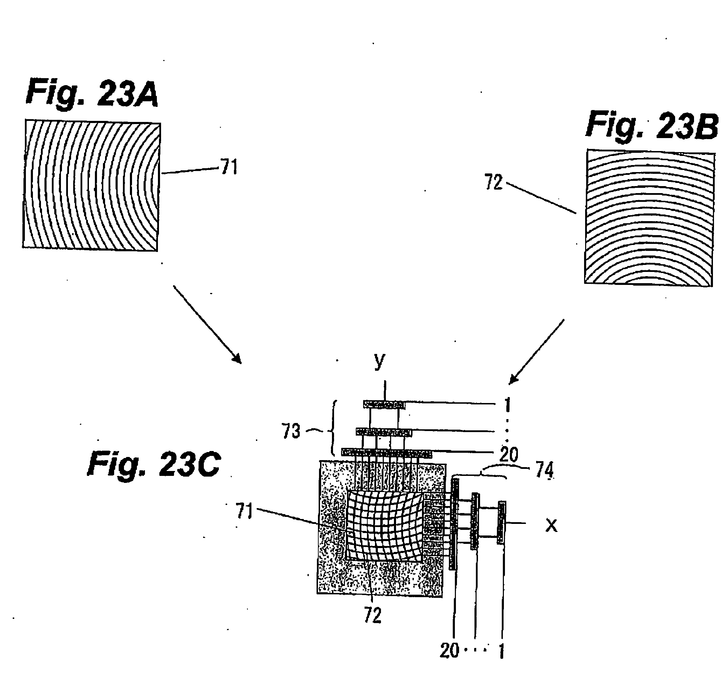

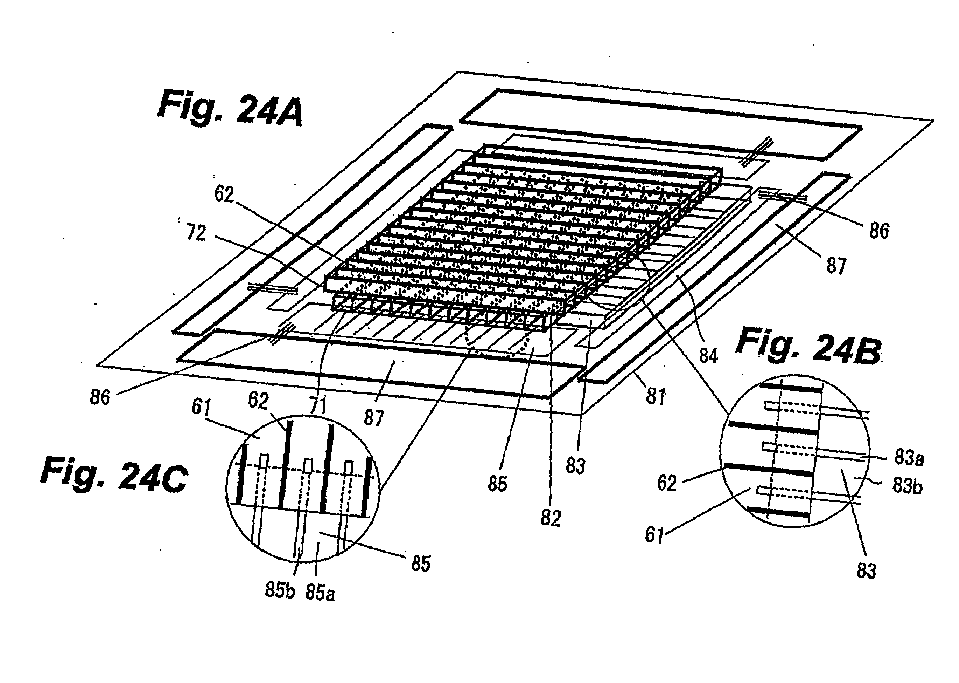

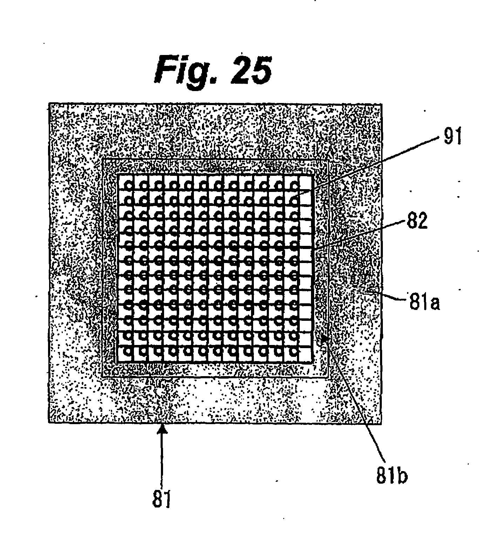

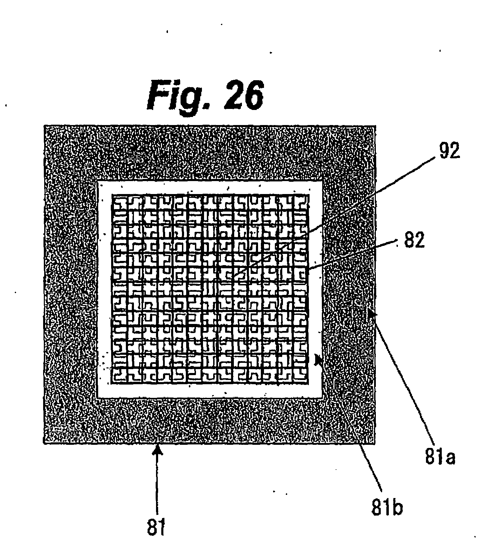

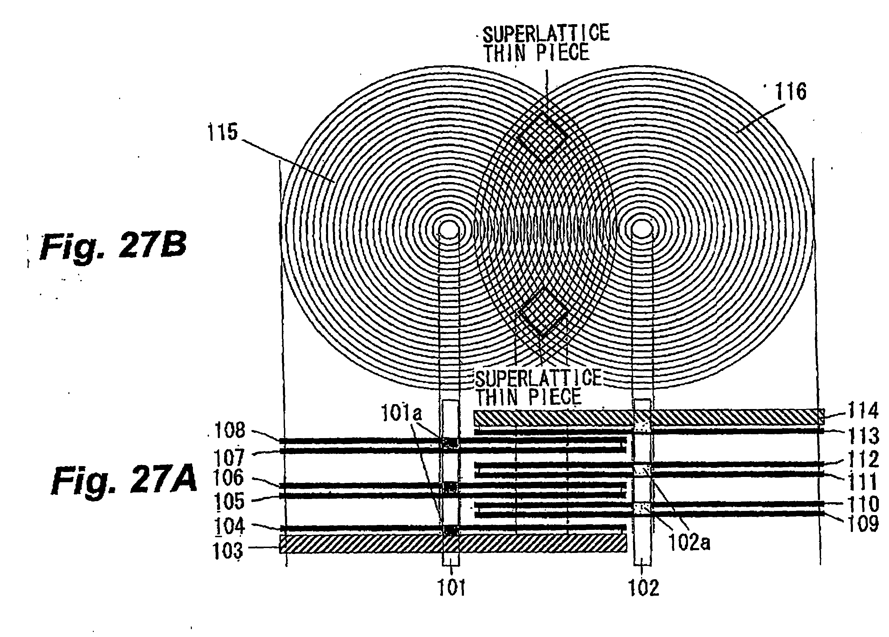

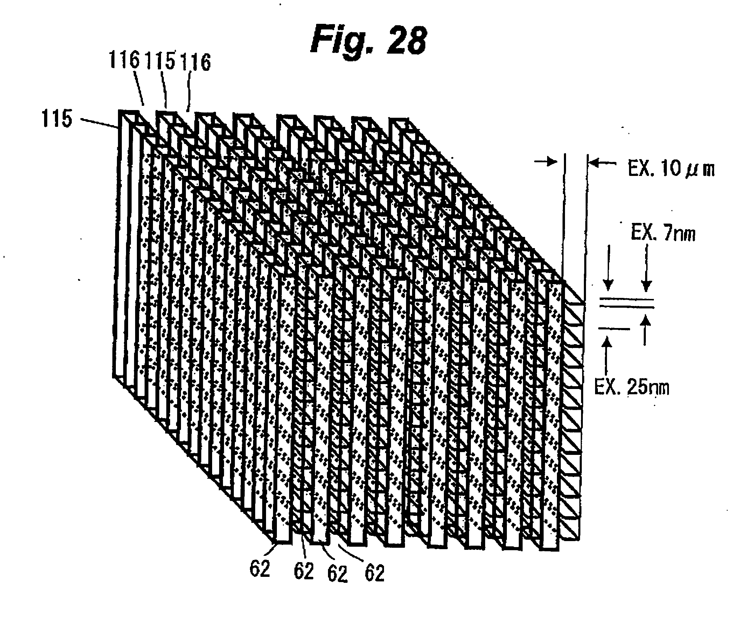

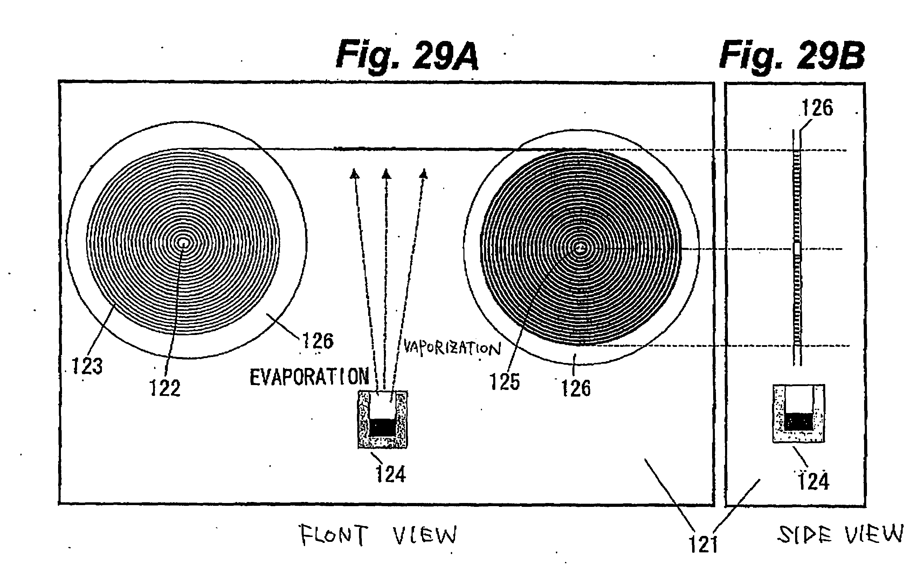

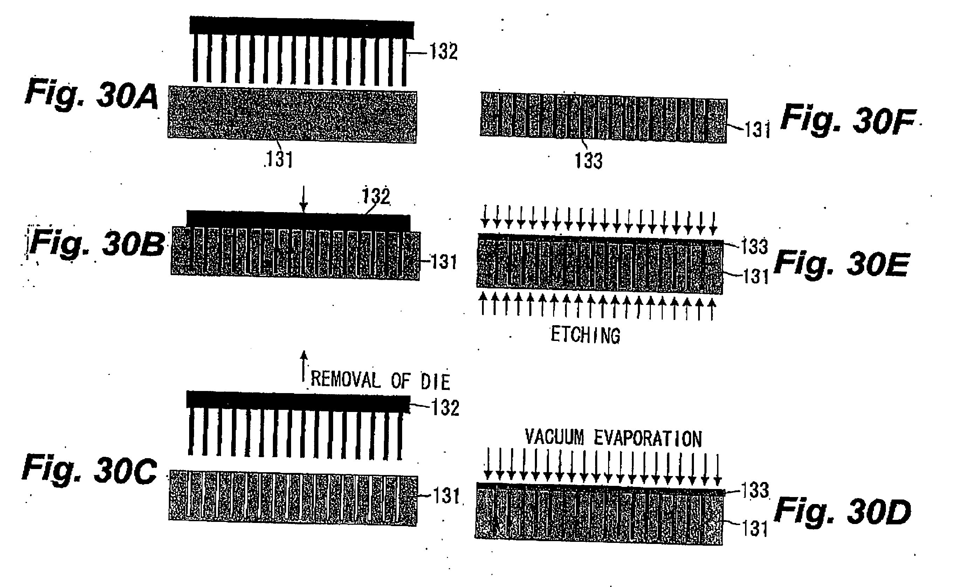

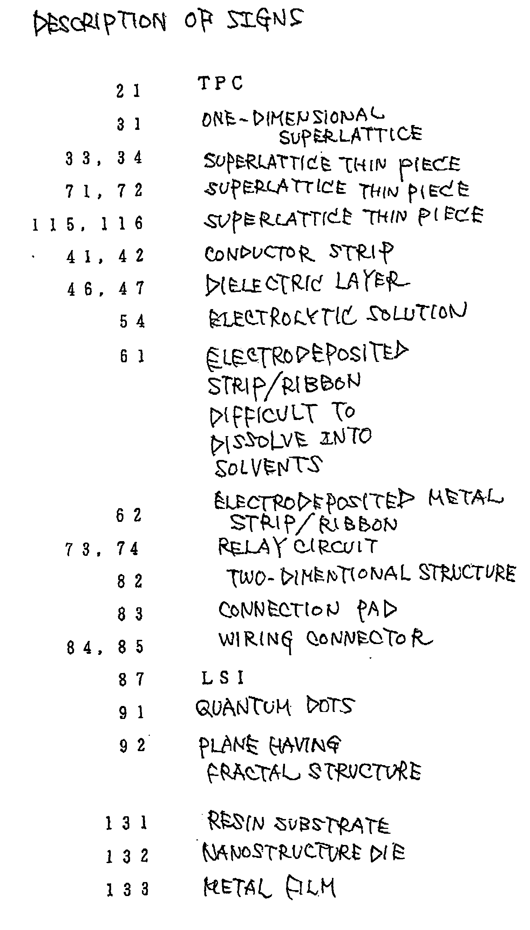

Figs. 1A and 1B are schematic diagrams forexplaining the present invention; Figs. 2A and 2B are schematic diagrams for explaining the present invention; Figs. 3 and 4 are schematic diagrams for explaining TPC; Fig. 5 is a schematic diagram for explaining the invention; Figs. 6A, 6B and 6C are schematic diagrams for explaining the invention; Fig. 7 is a schematic diagram for explaining Lhe invention; Figs. 8A, 8B and 8C are photographs of a dark-field image, lattice image and diffraction pattern of $(AlAs)_2$ $(GaAs)_2$ superlattice taken by a transmission electron microscope for explaining growth of an AlAs/GaAs atomic-resolution superlattice; Fig. 9 is a schematic diagram for explaining the electrochemical growth mechanism; Figs. 10A, 10B and 10c are schematic diagrams for explaining the invention; Figs. 11 through 14 are schematic diagrams showing results of calculation of the electrical potential distribution at the point contact as shown in Fig. 10A; Figs. 15 through 18 are schematic diagrams showing results of calculation of the electrical potential distribution at the intersection shown in Fig. 10B; Fig. 19 is a schematic diagram for explaining the invention; Figs. 20A and 20B are schematic diagrams for explaining the first embodiment of the invention; Fig. 21 is a schematic diagram for explaining the first embodiment of the invention; Fig. 22 is a schematic diagram for explaining the first embodiment of the invention; Figs. 23A, 23B and 23C are schematic diagrams for explaining the first embodiment of the invention; Figs. 24A, 24B and 24C are schematic diagrams showing the functional device according to the first embodiment of the invention; Fig. 25 is a schematic diagram for explaining the second embodiment of the invention; Fig. 26 is a schematic diagram for explaining the third embodiment of the invention; Figs. 27A and 27B are schematic diagrams for explaining the fourth embodiment of the invention; Fig. 28 is a schematic diagram for explaining the fourth embodiment of the invention; Figs. 29A and 29B are schematic diagrams for explaining the fifth embodiment of the invention; and Figs. 30A, 30B, 30C, 30D, 30E and 30F are schematic diagrams for explaining the sixth embodiment, of the invention.

Best Mode For Carrying Out the Invention

Some embodiments of the invention will now be explained below with reference to the drawings.

First explained is the first embodiment.

In the first embodiment, a superlattice thin piece or slice is formed by electrochemical growth. Fig. 20A shows a growth apparatus for this purpose. As shown in Fig. 20A, the growth apparatus has an electrolytic bath 51 containing an electrolytic solution 54 including anions ($A^-$) 52 and cations ($C^+$) 53 corresponding to two kinds of materials to be grown. In the electrolytic solution 54, a shaft 55 having a micro-columnar electrode portion, for example, is inserted to serve as a substrate for electrochemical growth, and two electrodes 56, 57 are placed to sandwich the shaft 55. The electrode portion of the shaft 55 is grounded, and the electrodes 56, 57 can be biased to voltage V1 and voltage Vr, respectively. Alternatively, the electrodes 56, 57 may be placed to encircle the electrode portion of the shaft 55 in form of a ring. It is also acceptable to provide a partition in the electrolytic bath 51 to separate anions 52 and cations 53 and rotate the shaft 55.

Fig. 21 shows exemplary structural details of the shaft 55. As shown in Fig. 21, the shaft 55 has a larger diameter in the electrode portion 55a serving as the substrate for growth than in the remainder portion 55b. A disk-shaped support plate 58 of glass or ceramics, for example, is mounted coaxially with the shaft 55 under the electrode portion 55a in contact therewith, and a disk-shaped support plate 60 precoated with an organic film 59 easy to dissolve into a solvent is mounted above the electrode portion 55a here again coaxially with the shaft 55. Diameters of the support plates 58, 60 are equal here. Distance between these support plates 58, 60 equals the thickness of the superlattice thin piece/slice to be grown. For example, it may be 1~1000 $\mu$m. Typically, it is 10~100$\mu$ m.

To have a superlattice thin piece to grow in the growth apparatus, the electrodes 56, 57 are biased alternately to V1=+V2 and Vr=-V1 as shown in Fig. 20B, for example. In this case, while the electrode 56 is biased to +V2, cations 53 in the electrolytic solution 54 deposit on side surfaces of the electrode portion 55a of the shaft 55. While the electrode 57 is biased to -V1, anions 52 in the electrolytic solution 54 deposit on side surfaces of the electrode portion 55a of the shaft 55. In this manner, as shown in Fig. 21, it is possible to deposit a periodical structure by alternate lateral growth of two different kinds of materials, namely, an electrodeposited organic strip/ribbon 61 difficult to dissolve into solvents, which is a dielectric element (insulator), and an electrodeposited metal strip/ribbon 62 concentrically (in form of annual rings or baumkuchen) on side surfaces of the electrode portion 55a of the shaft 55 in the space between the support plate 58 and the organic film 59. After growth, the periodical structure in form of annual rings is extracted by dissolving the organic film 59 into a solvent.

As the metal of the electrodeposited metal strip/ribbon 62, gold (Au), platinum (Pt) or copper (Cu) may be used, for example. For deposition of Au, a plating bath containing $KAu(CN)$, $(NH_4)_2HPO_4$, $K_2HPO_4$, or the like, is used. For deposition of Cu, a plating bath containing $CuSO_4 \cdot 5H_2O$, $H_2SO_4$, thiourea, or the like, is used. For deposition of Pt, a plating bath containing $(NH_4)_2PtCl$, $NaHPO_4 \cdot 12H_2O$, or the like, is used.

For growth of the electrodeposited organic strip/ribbon 61 difficult to dissolve into solvents, organic ions, for example, are used as the active agent (edited by Tsuguo Yamaoka, "New Development of Practical Polymeric Resist Materials, Their Applications as Photopolymers", Chapter 6, CMC Shuppan, 1996). By using approximately constant growth rate for growth of the electrodeposited organic strip/ribbon 61 difficult to dissolve into solvents and the electrodeposited metal strip/ribbon 62, time interval can be projected to the structure, and as shown in Fig. 22, here is obtained a disk-shaped superlattice thin piece in form of a periodical lamination of electrodeposited organic strips/ribbons 61 difficult to dissolve into solvents and electrodeposited metal strips/ribbons 62, in which each layer has the thickness accuracy in the order of atomic layer.

Next prepared are two cutouts as shown by the rectangular solid line in Fig. 22 from the disk-shaped superlattice thin piece. Figs. 23A and 23B show these cutouts rectangular superlattice thin pieces/slices 71, 72. As shown in Figs. 23A, 23B and 23C, the superlattice thin piece/slice 72 is superposed on the superlattice thin piece/slice 71 by rotating the relative orientation by an angle, typically, by 90 degrees. Here is completed a lattice whose two-dimensional minimum units can be accessed by signals and information as an artificial neuron system. Accuracy of this lattice can be enhanced to the order of an atomic layer. Strictly, the electrodeposited organic strip/ribbon 61 difficult to dissolve into solvents and the electrodeposited metal strip/ribbon 62 of each superlattice thin piece/slice 71, 72 are arcuate. However, the period of the electrodeposited metal strip/ribbon 62 is nearly 10 nm and very small, both the electrodeposited organic strips/ribbons 61 and the electrodeposited metal strips/ribbons 62 can be regarded straight. Therefore, this superlattice has substantially the same structure as that shown in Fig. 19.

If the superlattice thin pieces/slices 71, 72 each include N electrodeposited metal strips/ribbons 62, the electrodeposited metal films 62 of the superlattice thin piece/slice 71 and the electrodeposited metal strips/ribbons 62 of the superlattice thin piece/slice 72 makes $N^2$ intersections in total in Fig. 23C. In this case, these intersections (addresses) are easily accessible through each electrodeposited metal strip/ribbon 62 of the superlattice thin pieces/slices 71, 72. For example, as shown in Fig. 23C, by connecting relay circuits 73, 74 to individual electrodeposited metal strips/ribbons 62 appearing along edges of the superlattice thin pieces/slices 71, 72, which address should be accessed to can be controlled. More specifically, assuming that one side of the superlattice thin pieces/slices 71, 72 is 1 cm long, and the distance between adjacent electrodeposited metal strips/ribbons 62 is 10 nm, then 1 cm/10 nm = $10^{-2}m/10^{-8}m=10^6\sim2^{20}$. Thus, 20 stages of relay circuits 73, 74 can select $2^{20}\sim10^6$ electrodeposited metal strips/ribbons 62, and access to addresses can be controlled by approximately 20-bits information (per one degree of freedom on the x-y plane), for example.

At $N^2$ intersections made by the electrodeposited metal strips/ribbons 62 of the superlattice thin piece/slice 71 and the electrodeposited metal strips/ribbons 62 of the superlattice thin piece/slice 72, bottom-up structures having desired functions are built. For this purpose, quantum dots may be grown by self-organization or self-assembly on the superlattice thin piece/slice 71, for example, used as a substrate, and the other superlattice thin piece/slice 72 may be superposed thereon. Alternatively, a functional material layer (such as inorganic molecules or organic molecules) may be inserted between the superlattice thin pieces/slices 71, 72, and energy may be injected by applying a current between the electrodeposited metal strips/ribbons 62 that are opposed transversely. Thereby, a self-organized critical phenomenon arises, and as a result, a structure having a bottom-up structure between the superlattice thin pieces/slices 71, 72 can be obtained.

In the case where bottom-up structures to be built at $N^2$ intersections of the superlattice thin pieces/slices 71, 72 are made finally by injection and dissipation of energy, these bottom-up structures can be formed automatically in self-alignment with the individual intersections without the need of positioning for alignment. In this case, the electrodeposited metal strips/ribbons 62 of the superlattice thin piece/slice 71 and those of the superlattice thin piece/slice 72 need not intersect at right angles, and it is the only requirement that they connect to edges. These bottom-up structures may be simple memory devices, for example, or bottom-up devices having acquired sophisticated functions by self-organization mentioned above. Dimension of the mesh structure by the electrodeposited metal strips/ribbons 62 of the superlattice thin pieces/slices 71, 72 is between 1 and the dimension 2 of the bottom-up system (plane system in this case), and here is established a relation equivalent to the dimension of living neuron systems being smaller than the dimension of cell systems. The source material as the basis for forming the bottom-up structures may be introduced by intercalation or by sandwiching, for example. It is also possible to sharpen the knife-edges of the electrodeposited metal films 62 by electrolytic etching before the intercalation/sandwiching. Thereby, it is possible to enhance the surface strengthening effect and compose the bottom-up structures built at intersections of the electrodeposited metal strips/ribbons 62 of the superlattice thin pieces/slices 71, 72 from fewer atomic groups (molecular groups).

A functional device is made by connecting the above-explained two-dimensional structure including bottom-up structures sandwiched by the superlattice thin pieces/slices 71, 72 to a silicon LSI. That is, as shown in Fig. 24A, the two-dimensional structure 82 is mounted on a substrate 81. Then, the electrodeposited metal strips/ribbons 62 of the superlattice thin piece/slice 72 are connected to a wiring connector 84 via a connection pad 83, and the electrodeposited metal strips/ribbons 62 of the superlattice thin piece/slice 71 are connected to a wiring connector 85. The connection pad 83 is in form of crossties, and its thickness is approximately equal to the difference between the top surface of the wiring connector 84 and the bottom surface of the superlattice thin piece/slice 72. Fig. 24B shows the connection between electrodeposited metal strips/ribbons 62 of the superlattice thin piece/slice 72 and the connection pad 83 in an enlarged scale. The connection pad 83 has electrode 83b formed with narrow spacing 83a with the electrode 83b having a width approximately equal to the width (thickness) of the electrodeposited organic strip/ribbon 61, and these electrode portions 83b are connected to the electrodeposited metal strips/ribbons 62. Fig. 24C shows the connection between electrodeposited metal strip/slice 62 of the superlattice thin piece/slice 71 and the wiring connector 85 in an enlarged scale. The wiring connector 85 has electrode 85b formed with narrow spacing 85a with the electrode 85b having a width approximately equal to the thickness of the electrodeposited organic strip/ribbon 61. The wiring connectors 84, 85 are connected to top-down LSI 87 having desired functions via a wiring 86. Thereby, the two-dimensional structure 82 is connected to LSI 87, and here is obtained the highly functional device as a whole. LSI 87 is typically a silicon LSI, but may be an LSI using other semiconductors such as GaAs or other compound semiconductors. LSI 87 may be a chip mounted on the substrate 81. Alternatively, using a semiconductor substrate like a silicon substrate as the substrate 81, the circuit may be formed by LSI process.

Cornnection between the electrodeposited metal strips/ribbons 62 of the superlattice thin pieces/slices 71, 72 and the connection pad 83 or the wiring connector 85 may be made by N junctions per one side. Ratio between the number of junctions and the number of intersections of the superlattice thin pieces/slices 71, 72 for building the bottom-up structures are scaled by 1/N. Therefore, contrary to conventional techniques inviting the positional alignment error $N^2$, the embodiment of the invention can reduce the positional alignment error as the value of N increases, or in other words, as the degree of integration increases, and can therefore improve the production yield of devices than conventional techniques. Especially, as shown in Figs. 24B and 24C, the embodiment of the invention can approximately equalize the width of each electrode 83b of the connection pad 83 to the width (thickness) of each electrodeposited organic strip/ribbon 61 difficult to dissolve into solvents, which is the dielectric element of the superlattice thin piece/slice 72, and can approximately equalize the width of each electrode portion 85b of the wiring connector 85 to the width (thickness) of each electrodeposited organic strip/ribbon 61, which is the dielectric element of the superlattice thin piece/slice 72. Therefore, the embodiment can increase the margin for positional alignment between the electrodeposited metal strips/ribbons 62 of the superlattice thin pieces/slices 71, 72 and the electrode 83b, 85b, and this contributes to enhancement of the production yield of devices as well.

The top-down system comprising LSIs 87 represented by silicon LSIs has a spatially anisotropic structure in which time is projected in the structure discontinuously as explained before, i.e. the structure characterized by (time projectivity, spatial directionality) = $(\downarrow,\downarrow)$ according to the foregoing notation. Further, since the bottom-up structure sandwiched between the superlattice thin pieces/slices 71, 72 is formed as an autonomous decentralized system, time is continuously projected in the structure. Therefore, it has no particular orientation in general, and has, to good approximation an isotropic configuration. Thus, the configuration is characterized by (time projectivity, spatial directionality) = $(\uparrow,\uparrow)$. Therefore, these both structures, even when directly positioned side by side, exhibit the relation of $(\uparrow,\uparrow)$ $(\downarrow,\downarrow)$, and the arrows flip. Therefore, these structures do not couple directly. In contrast, the said two-dimensional structure 82 has an anisotropic configuration with time being continuously projected in the growth direction, that is, the configuration characterized by (time projectivity, spatial directionality) = $(\uparrow,\downarrow)$. In the functional device shown in Fig. 24A, Fig. 24B and Fig. 24C, the two-dimensional structure 82 having the property $(\uparrow,\downarrow)$ is put connecting or uniting between bottom-up structure having the property $(\uparrow,\uparrow)$ and the LSI 87 with a top-down configuration having the property $(\downarrow,\downarrow)$. As a result, the relations of united structure characterized by $(\uparrow,\uparrow)$ $(\uparrow,\downarrow)$ $(\downarrow,\downarrow)$ are established with the neighboring arrows aligning without flips. Therefore, $(\uparrow,\uparrow)$ structures and $(\downarrow,\downarrow)$ structures, i.e. bottom-up systems and top-down systems, can be connected or united adequately enabling inter-accessibility.

Thus, the first embodiment makes it possible to easily realize a functional device having sophisticated functions capable of making the best use of advantages of a bottom-up system and a top-down system represented by silicon LSI. This functional device can exhibit various functions depending upon a combination of functions assigned to the bottom-up system and functions assigned to silicon LSI.

Next explained is the second embodiment of the invention. This embodiment uses quantum dots as the bottom-up structures.

As shown in Fig. 25, a two-dimensional structure 82 is mounted in a central part of the substrate 81 in the second embodiment. In this case, quantum dots 91 are inserted as bottom-up structures at crosswise intersections of electrodeposited metal strips/ribbons 62 of the superlattice thin pieces/slices 71, 72 of the two-dimensional structure 82. Period and thickness of the electrodeposited metal strips/ribbons 62 of the superlattice thin pieces/slices 71, 72 can be sufficiently smaller than the period of the array of the quantum dots 91. Therefore, the quantum dots 91 can be accessed electrically by one-to-one addressing with crosswise intersections of the electrodeposited metal strips/ribbons 62 of the superlattice thin pieces /slices 71, 72. That is, quantum dots 91 need not exist at all crosswise intersections, but all quantum dots 91 are always associated with crosswise intersections. This redundancy enhances the production yield of quantum dot devices, and induces the role of side-gates to diodes composed of crosswise intersections having, for example, quantum dots as active portions. Thus, it is possible to configure the quantum-dot device as a triple-terminal device although it was extremely difficult. In this case, it is effective to use as the superlattice thin pieces/slices 71, 72 a lamination-repeated structure of: a structure composed of two conductive layers sandwiching an extremely-thin dielectric material; and a slightly thicker dielectric layer, i.e. a structure having two high and low spatial frequencies.

The structure shown in Fig. 25 is applicable as a flat display as well. Quantum dots 91 used in this display are light emitting quantum dots, and they may be light emitting organic molecular monomer, oligomer of polymer. In addition, since the superlattice thin pieces/slices 71, 72 have freedom in thickness, here is the advantage that the electrodeposited metal strips/ribbons 62 can be configured to as very thin conductive lines having high conductivity. In this flat display, since each crosswise intersection has a small area, it does not make a large shadow. Therefore, a bright screen can be realized with low power consumption. Further, although not shown, by using a lamination-repeated structure of a conductive two-layered structure sandwiching an extremely thin dielectric layer and a slightly thicker dielectric layer as explained above, i.e. a structure having two high and low frequencies as the spatial frequency, as the vertical and horizontal electrodeposited metal strips/ribbons 62, i.e. the respective conductive lines, redundancy can be introduced.

This redundancy reduces the risk of losing pixels by defects of the active portions, for example, and enhances the production yield.

Moreover, the configuration of Fig. 25 can be used not only as optical devices but also as electronic devices by controlling positions and charged conditions of functional groups of, for example, $\pi$ electron organic molecules inserted at the crosswise intersections. Therefore, it can be used as integrated molecular electronics devices. Moreover, the above-explained redundancy obtained by using a superlattice thin piece structure having two high and low frequencies as the spatial frequency is very effective to enhance the fault tolerance needed in molecular electronic devices.

The outer circumferential portion 81a of the substrate 81 is the region for locating top-down LSIs. However, they need not be provided all around, and may be provided locally.

Where appropriate, a multi-layered structure may be used, and top-down LSIs can be provided on and under the entire surface including the central portion of the substrate 81.

The frame portion 81b around the two-dimensional structure 82 connects to the electrodeposited metal strips/ribbons 62 extending in parallel in the x and y directions and accessing to $N^2$ intersections of the two-dimensional structure 82 with the same configuration as that of Figs. 24B and 24C.

In the other respects, the second embodiment is identical to the first embodiment within the extent not contradict to its nature.

The second embodiment ensures the same advantages as those of the first embodiment as well.

Next explained is the third embodiment of the invention.

As shown in Fig. 26, the third embodiment uses a plane having self-similarity and a hierarchical configuration, i.e. a plane 92 having a fractal structure, as the bottom-up structure instead of the array of quantum dots used as the bottom-up structure in the second embodiment. Here again, the redundancy obtained by using a superlattice thin piece structure having two high and low frequencies as the spatial frequency is greatly effective to enhance robustness of the system.

In the other respects, the third embodiment is identical to the first and second embodiments within the extent not contradict to its nature.

The third embodiment ensures the same advantages as those of the first and second embodiments as well.

Next explained is the fourth embodiment of the invention.

In the fourth embodiment, as shown in Fig. 27A, two shafts 101, 102 are set in a spaced parallel relation in the electrolytic solution 54 of the growth apparatus used in the first embodiment. In the lengthwise direction of the shaft 101, a plurality of electrode portions 101a are provided in equal intervals, for example. In the lengthwise direction of the shaft 102, a plurality of electrode portions 102a are provided in equal intervals, for example, in an alternate relation with the electrode portions 101a. Above and under the lowermost electrode portion 101a of the shaft 101, a support plate 103 and a resin plate 104 easy to dissolve into solvents are mounted via a predetermined distance. Above and under the next electrode portion 101a, two resin plates 105, 106 easy to dissolve into solvents are mounted via a predetermined distance. Above and under the still next electrode portion 101a, similar two resin plates 107, 108 easy to dissolve into solvents are mounted via a predetermined distance. On the other hand, above and under the lowermost electrode portion 102a of the shaft 102, two resin plates 109, 110 easy to dissolve into solvents are mounted via a predetermined distance. Above and under the next electrode portion 102a, two resin plates 111, 112 easy to dissolve into solvents are mounted via a predetermined distance. Above and under the still next electrode portion 102a, a resin plate 113 easy to dissolve into solvents and a support plate 114 are mounted via a predetermined distance. These combinations of every two plates are alternate with those mounted on the shaft 101. In this case, these support plates 103, 114 and resin plates 104 to 113 easy to dissolve into solvents are disk-shaped, and their radii are slightly smaller than the distance between the shafts 101, 102. Therefore, the support plate 103 and the resin plates 104 through 108 mounted on the shaft 101 overlaps with the resin plates 109 through 113 and the support plate 114 mounted on the shaft 102 in space between the shafts 101, 102.

With this growth apparatus, growth is done as explained below, for example.

An electrically conductive organic resist (not shown) is first coated on side surfaces of the electrode portions 101a of the shaft 101 and the electrode portions 102a of the shaft 102 before hand. Here is used an organic resist that dissolves into a solvent used for dissolving the resin plated 104 through 113 easy to dissolve into solvents. After that, in the same manner as the first embodiment, a periodical structure is formed by alternate lateral growth on side surfaces of the electrode portions 101a via an electrically conductive organic resist in the space between the support plate 103 and the resin plate 104 easy to dissolve into solvents both mounted on the shaft 101, the space between the resin plates 105, 106 and the space between the resin plates 107, 108. Similarly, also in the space between the resin plates 109, 110 easy to dissolve into solvents, both mounted on the shaft 102, the space between the resin plates 111, 112 and the space between the resin plate 113 and the support plate 114, a periodical structure is formed by lateral growth on side surfaces of the electrode portions 102a via a electrically conductive organic resist. The periodical structure grown on side surfaces of the electrode portions 101a may be either identical to or different from the periodical structure grown on side surfaces of the electrode portions 102a. Subsequently, the electrolytic solution 54 is discharged from the electrolytic bath 51, and a predetermined solvent is introduced to dissolve the electrically conductive organic resist coated on the resin plates 104 through 113 and side surfaces of the electrode portions 101a, 102a. As a result, individual disk-shaped superlattice thin pieces 115 formed by lateral growth on side surfaces of the electrode portions 101a and individual disk-shaped superlattice thin pieces 116 formed by lateral growth on side surfaces of the electrode portions 102a sink down and accumulate alternately. In this manner, a laminated structure composed of alternate accumulation of superlattice thin pieces is obtained.

After that, the laminated structure is taken out from the electrolytic bath, and portions shown by solid-line rectangles in Fig. 27B are cut out. Thereby, superlattice thin-piece three-dimensional laminations are obtained as shown in Fig. 28, for example. By using these superlattice thin-piece three-dimensional laminations, a functional device is fabricated in the same manner as the first embodiment.

In the other aspects, the fourth embodiment is identical to the first embodiment, and their explanation is omitted here.

The fourth embodiment has an additional advantage that the functional device is significantly enhanced in functionality and degree of integration by using superlattice thin-piece three-dimensional laminations to form the functional device, in addition to the same advantages as those of the first embodiment.

Next explained is the fifth embodiment of the invention.

Figs. 29A is a plan view of a vacuum chamber 121 of a vacuum evaporation apparatus, and 29B is the side view of it. As shown in Figs. 29A and 29B, the fifth embodiment winds a resin base film 123 in form of a narrow thin flat tape on a roller 122 beforehand, and after forming a thin metal film (not shown) by evaporating a metal, for example, on one surface of the resin base film 123 from a vapor deposition source 124, winds up the resin base film 123 with the metal film thereon onto a take-up roller 125. Reference numeral 126 denotes support plates that support the roll of resin base film 123 from opposite sides thereof.

Once the resin base film 123 with the metal film is wound up onto the take-up roller 125, it makes a spiral structure in which the resin base film 123 and the metal film are laminated alternately. This spiral structure is approximately equivalent to the concentrical structure shown in Fig. 22. Therefore, a superlattice thin film can be obtained based on the spiral structure in Lhe same manner as the first embodiment.

The fifth embodiment has the same advantages as those of the first embodiment.

Next explained is the sixth embodiment of the invention.

In the sixth embodiment, superlattice thin pieces/slices 71, 72 are made by the imprinting method shown in Figs. 30A through 30E. First as shown in Fig. 30A, a nanostructure die 132 having a pattern configuration identical to the electrodeposited metal film 62 of the first embodiment is driven into a resin substrate 131 as shown in Fig. 30B for pressing. The nanostructure die 132 is removed thereafter from the resin substrate 131 as shown in Fig. 30C. After that, as shown in Fig. 30D, a metal film 133 is deposited onto the resin substrate 131 by vacuum evaporation, for example, to bury the grooves formed into the resin substrate 131 by the pressing using the nanostructure die 132 with the metal film 133. Next as shown in Fig. 30E, the resin substrate 131 undergoes etching from top and bottom, surplus of the metal film 133 is removed from the top surface, and the metal film 133 formed on the back surface is exposed. As a result, as shown in Fig. 30F, superlattice thin pieces/slices 71, 72 with metal film 133 are obtained.

In the other respect, the sixth embodiment is identical to the first embodiment to the extent not contradict to its nature.

The sixth embodiment has the same advantages as those of the first embodiment.

Heretofore, some embodiments have been explained specifically. However, these embodiments should not be construed to limit the invention, but the invention contemplates various changes and modifications based on the technical concept of the invention.

For example, numerical values, materials, configurations, locations, and so on, are not but mere examples, and any other appropriate numerical values, materials, configurations, locations, and so on, may be employed, if necessary.

Further, as the layer sandwiched by superlattice thin pieces, giant magnetoresistance materials of the ferroelectric system or the PrCaMnO system are usable in addition to $\pi$ electron conjugate organic molecular materials and biomolecular materials.

The concentrical structure itself can be made by other methods than the methods explained as the first to sixth embodiments. For example, it is possible to alternately form different substances on side surfaces by vacuum evaporation while rotating a rotation axis or alternately grow different substances on a columnar substrate by MOCVD, for example.

As materials for forming the concentrical structure, other materials than those used in the first to six embodiments may be used as well. As the dielectric material, inorganic substances such as oxides and organic substances such as polyethylene and polycarbonate may be used.

To bind ($\uparrow,\uparrow$) and ($\downarrow,\downarrow$), a structure having the property ($\downarrow,\uparrow$), i.e. a structure with discontinuous projection of time and isotropic spatial configuration, may be used in lieu of a structure having the property ($\uparrow,\downarrow$) already explained.

Brain-derived structures that make a category of top-down structures include tangible objects and intangible objects. The former are physical architectures including hardware having three-dimensional existence whereas the latter includes intellectual architectures such as intellectual academic systems, database, software, and so on. Gene-derived structures forming a category of bottom-up structures include not only structures of cell or tissue levels'but also organs such as skeletons and internal organs.

Coupling and integration of a bottom-up system and a top-down system are not limited only to hardware in narrow sense, but applicable to various aspects where flows of two incompatible systems rejecting their direct coupling. For example, by carefully examining properties of both systems and identifying and extracting individual sets of incompatible properties $(\uparrow,\uparrow)$ and $(\downarrow,\downarrow)$, an intermediate layer (buffering strategy) having the property $(\uparrow,\downarrow)$ can be inserted between them (if necessary, the operation can be repeated in mode of recurring formula and iteratively. Thereby, the invention can be used to function as a quasi-software scheme (a scheme on a business model or a service model) for matching between movements indwelling in and springing up from users or a mass of consumers (of a hierarchical bottom), such as build-up of markets, consumption trends, etc) and rules or planning of business operations and administrations (of the hierarchical top) given downward from the top according to a predetermined plans.

Further, the concept of the invention can be extended to N component systems like $(x_1, x_2, ..., x_N)$, and coupling of a plurality of components such as $x_i$ and $x_j$ is possible. In addition, $x_i$ need not be two values of $\uparrow, \downarrow$, and may be a many-valued (discrete) parameter.

As described above, according to the present invention, it is possible to realize a sophisticated functional device that can make the best use of advantages of a bottom-up system represented by a living matter and a top-down system represented by silicon LSI. That is, it is possible to realize a sophisticated functional device providing an artificial information transmission and control system corresponding to an associated neuron system between a bottom-up system corresponding to cells and a top-down system.

Furthermore, by using a structure that projects time continuously, it is possible to produce an artificial neuron system equivalent having the extreme resolution (control on the order of atomic layer). This in turn enables supermultiple parallel arrangement of nanostructures/zero-dimensional structures, which can perform surface strengthening effect, for example, over a bulk size.

Moreover, by creating a nanoscale discrete bulk-size system and coupling an LSI system formed on a silicon substrate and an autonomously dispersed system located closely, for example, a platform connecting a bottom-up system and a top-down system can be realized.

Further, by creating a nanoscale discrete bulk size system and obtaining a global size of two-dimensional to three-dimensional nanostructures appearing in the system and addressable locally and individually, a sophisticated platform that couples a microscopic world and a macroscopic world can be obtained. Furthermore, by synergetically coupling almost all nanoscale parallel new functional elements, which have no forms at present but will acquire forms, to existing ULSI systems, epoch-making increase of functions will be possible.

Moreover, the present invention makes it possible to realize a flexible functional device having the degree of integration 10~160 Gbits/cm$^2$ (0.1~1Tb/inch$^2$). For example, a ubiquitous information device in which the surface of a substance directly becomes functional devices can be realized. In this case, since the core portion of the functional device can be formed by lithography, the functional device can be manufactured at a low cost. If the number of elements is N, although conventional techniques needed positional alignment for N$^2$, the present invention needs positional alignment of 4N only, and alleviates the difficulty of positional alignment by 1/N as compared with the conventional difficulty. Moreover, this effect is enhanced with increase of the recording capacity.

In addition, the invention can provide a system of discrete substances represented by cellular automaton governed by difference equations, instead of a system of substances governed by differential equations.

This system of substances can demonstrate modulated dimensions, connectivity, spontaneous break of symmetry, or self-organized critical phenomenon concerning a remarked nature, for example.

Nanotechnologies are expected to develop almost ad infinitum. However, matrix structures supporting nanotechnologies have a cutoff in terms of inter-atomic distance (endless miniaturization is not possible). Therefore, it is important to foresee their "point of convergence" (with certain accuracy), set the limit value and coupling with existing ULSI systems in straight sights from the present moment to start conquering from the viewpoint of preceding the era and acquiring expected fruits of future nanotechnologies that are figureless currently.

**Claims**

**1.** A functional device, formed by coupling a first structure formed by local interaction and a second structure formed according to a predetermined global rule via a third structure having an anisotropic configuration.

**2.** A functional device according to claim 1, **characterized in that** the first structure is formed by autonomous distribution type interaction, the second structure is formed according to a predetermined global designing rule, and the third structure comprises a flat plane or curved plane having a periodical and anisotropic configuration.

3. A functional device according to claim 1, **characterized in that** the first structure is formed by autonomous distribution type interaction, the second structure is formed according to a predetermined global design rule, and the third structure comprises a plurality of planes stacked in a crossing relation, each having a periodical and anisotropic configuration.

4. A method of manufacturing a functional device including a first structure and a second structure which are coupled via a third structure, **characterized by** comprising
a step of forming the third structure to have an anisotropic configuration,
a step of forming the second structure according to a predetermined global rule, and
a step of forming the first structure by local interaction.

5. A functional system, **characterized by** using a functional device formed by coupling a first structure formed by local interaction and a second structure formed according to a predetermined global rule via a third structure having an anisotropic structure.

6. A functional device, **characterized by** coupling an isotropic first structure in which time is continuously projected and an anisotropic second structure in which time is discontinuously projected via a third structure having an anisotropic and periodical structure.

7. A functional device according to claim 6, **characterized in that** the third structure comprises a plurality of planes stacked in a crossing relation, each having a periodical and anisotropic structure.

8. A method of manufacturing a functional device including a first structure and a second structure which are coupled via a third structure, **characterized by** comprising
a step of forming the third structure to have an anisotropic and periodic configuration,
a step of forming the second structure to be anisotropic in which time is discontinuously projected, and
a step of forming the first structure to be isotropic in which time is continuously projected.

9. A functional system, **characterized by** using a functional device formed by coupling an isotropic first structure in which time is continuously projected and an anisotropic second structure in which time is discontinuously projected via a third structure having an anisotropic and periodical configuration.

10. A functional device, **characterized by** coupling an isotropic first structure in which time is continuously projected and an anisotropic second structure in which time is discontinuously projected via an anisotropic third structure in which time is continuously projected.

11. A functional device according to claim 10, **characterized in that** the third structure recovers pseudo-isotropy by sliding the directionality of the anisotropic two dimensional structure in which time is continuously projected, and laminating at least two dimensional structures.

12. A method of manufacturing a functional device including a first structure and a second structure which are coupled via a third structure, **characterized by** comprising
a step of forming the third structure to be anisotropic in which time is continuously projected,
a step of forming the second structure to be anisotropic in which time is discontinuously projected, and
a step of forming the first structure to be isotropic in which time is continuously projected.

13. A functional system, **characterized by** using a functional device formed by coupling an isotropic first structure in which time is continuously projected and an anisotropic second structure in which time is discontinuously projected by an anisotropic third structure in which time is continuously projected.

14. A functional device, **characterized by** coupling a first structure formed by a bottom-up process and a second structure formed by a top-down process via an anisotropic and periodic third structure.

15. A functional device according to claim 14, **characterized in that** the first structure is formed by the bottom-up process relying on self-organization, the second structure is an integrated circuit formed by the top-down process, and the third structure recovers pseudo-isotropy by stacking in a crossing relation a plurality of anisotropic two

dimensional structures in which time is continuously projected.

16. A method of manufacturing a functional device including a first structure and a second structure which are coupled via a third structure, **characterized by** comprising
a step of forming the third structure to be anisotropic and periodic,
a step of forming the second structure by a top-down process, and
a step of forming the first structure by a bottom-up process.

17. A functional system, **characterized by** using a functional device formed by coupling a first structure formed by a bottom-up process and a second structure formed by a top-down process via an anisotropic and periodic third structure.

18. A functional device, **characterized by** coupling a first structure having self-similarity or a fractal structure and a second structure formed by an integrated circuit formed by a top-down process via a third structure having an anisotropic and periodic configuration.

19. A functional device according to claim 18, **characterized in that** the third structure comprises a plurality of planes stacked in a crossing relation, each having the anisotropic and periodic structure.

20. A method of manufacturing a functional device including a first structure and a second structure which are coupled via a third structure, **characterized by** comprising
a step of forming the third structure to have an anisotropic and periodic configuration,
a step of forming the second structure as an integrated circuit by a top-down process, and
a step of forming the first structure having self-similarity or a fractal structure.

21. A functional system, **characterized by** using a functional device formed by coupling a first structure having self-similarity or a fractal structure and a second structure formed by an integrated circuit formed by a top-down process via a third structure having an anisotropic and periodic configuration.

22. A functional device according to claims 1, 2, 3, 6, 7, 10, 11, 14, 15, 18, or 19, **characterized in that** the third structure has at least two thin pieces each comprising periodical configuration of conductive layers, each having a thickness ranging from 0.2 nm to 60 nm, and dielectric layers, each having a thickness ranging from 0.2 nm to 50 $\mu$m, such that the layers cross each other.

23. A method of manufacturing a functional device according to claims 4, 8, 12, 16, or 20, **characterized in that** the third structure has at least two thin pieces each comprising periodical configuration of conductive layers, each having a thickness ranging from 0.2 nm to 60 nm, and dielectric layers, each having a thickness ranging from 0.2 nm to 50 $\mu$m, such that the layers cross each other.

24. A functional system according to claims 5, 9, 13, 17, or 21, **characterized in that** the third structure has at least two thin pieces each comprising periodical configuration of conductive layers, each having a thickness ranging from 0.2 nm to 60 nm, and dielectric layers, each having a thickness ranging from 0.2 nm to 50 $\mu$m, such that the layers cross each other.

25. A functional device according to claims 1, 2, 3, 6, 7, 10, 11, 14, 15, 18, or 19, **characterized in that** the anisotropic structure has a plurality of spatial frequencies.

26. A method of manufacturing a functional device according to claims 4, 8, 12, 16, or 20, **characterized in that** the anisotropic structure has a plurality of spatial frequencies.

27. A functional system according to claims 5, 9, 13, 17, or 21, **characterized in that** the anisotropic structure has a plurality of spatial frequencies.

28. A functional device according to claims 1, 2, 3, 6, 7, 10, 11, 14, 15, 18, or 19, wherein the anisotropic structure which is a system of substance has different kinds of carriers of a plurality of interactions or physical phenomena, which are different by at least one order in characteristic time for propagation of interaction, different in nature each other, and serve as a host concerning a remarked interaction or physical phenomenon, **characterized in that** a second host substance corresponding to the carrier **characterized by** slow interaction or physical phenomenon is dispersed in the order from 1 nm to 100 nm scale by a first host substance corresponding to the carrier **characterized in** quick interaction time or physical phenomenon time.

29. A method of manufacturing a functional device according to claims 4, 8, 12, 16, or 20, wherein the anisotropic structure which is a system of substance has different kinds of carriers of a plurality of interactions or physical phenomena, which are different by at least one order in characteristic time for propagation of interaction, different in nature each other, and serve as a host concerning a remarked interaction or physical phenomenon, **characterized in that** a second host substance corresponding to the carrier **characterized by** slow interaction or physical phenomenon is dispersed in the order from 1 nm to 100 nm scale by a first host substance corresponding to the carrier **characterized in** quick interaction time or physical phenomenon time.

30. A functional system according to claims 5, 9, 13, 17, or 21, wherein the anisotropic structure which is a system of substance has different kinds of carriers of a plurality of interactions or physical phenomena, which are different by at least one order in characteristic time for propagation of interaction, different in nature each other, and serve as a host concerning a remarked interaction or physical phenomenon, **characterized in that** a second host substance corresponding to the carrier **characterized by** slow interaction or physical phenomenon is dispersed in the order from 1 nm to 100 nm scale by a first host substance corresponding to the carrier **characterized in** quick interaction time or physical phenomenon time.

31. A functional device according to claim 28, **characterized in that** at least one of the first host substances connecting to an internal arbitrary position of an entire system is present or exposed on a one dimensional line or a curved line encircling the system.

32. A method of manufacturing a functional device according to claim 29, **characterized in that** at least one of the first host substances connecting to an internal arbitrary position of an entire system is present or exposed on a one dimensional line or a curved line encircling the system.

33. A functional system according to claim 30, **characterized in that** at least one of the first host substances connecting to an internal arbitrary position of an entire system is present or exposed on a one dimensional line or a curved line encircling the system.

34. A functional device according to claim 22, **characterized in that** the natures of the dielectric layers of both sides contacting the conductive layers are different each other.

35. A method of manufacturing a functional device according to claim 23, **characterized in that** the natures of the dielectric layers of both sides contacting the conductive layers are different each other.

36. A functional system according to claim 24, **characterized in that** the natures of the dielectric layers of both sides contacting the conductive layers are different each other.

37. A functional device according to claims 1, 2, 3, 6, 7, 10, 11, 14, 15, 18, or 19, **characterized in that** the second structure in form of the integrated circuit manufactured by the top-down process couples to a combination of the first structure and the third structure, as an interface region, a linear or curved one dimensional structure existing along an edge of the combination.

38. A method of manufacturing a functional device according to claims 4, 8, 12, 16, or 20, **characterized in that** the second structure in form of the integrated circuit manufactured by the top-down process couples to a combination of the first structure and the third structure, as an interface region, a linear or curved one dimensional structure existing along an edge of the combination.

39. A functional system according to claims 5, 9, 13, 17, or 21, **characterized in that** the second structure in form of the integrated circuit manufactured by the top-down process couples to a combination of the first structure and the third structure, as an interface region, a linear or curved one dimensional structure existing along an edge of the combination.

40. A functional material, **characterized in that** the third structure according to claims 1, 2, 3, 6, 7, 10, 11, 14, 15, 18, or 19 is made by stacking at least three layers.

**41.** A functional material, **characterized in that** the laminated layers comprising the first structure and the third structure according to claims 1, 2, 3, 6, 7, 10, 11, 14, 15, 18, or 19 are made by stacking at least two layers.

**42.** A functional device, **characterized in that** the functional device comprises a structure made by stacking at least two thin pieces each being a periodical configuration of strip-shaped conductive layers and dielectric layers, such that the layers cross each other and edges of the conductive layers are opposed to each other.

**43.** A functional material, **characterized in that** the functional material comprises a structure made by stacking at least two thin pieces each being a periodical configuration of strip-shaped conductive layers and dielectric layers, such that the layers cross each other and edges of the conductive layers are opposed to each other.

**44.** A functional device, **characterized in that** the functional device comprises a structure made by stacking at least two thin pieces each having a periodical configuration of strip-shaped conductive layers, each having a thickness in the range from 0.2 nm to 60 nm, and dielectric layers, each having a thickness larger than the thickness of each said conductive layer, such that the layers cross each other and edges of the conductive layers are opposed to each other.

**45.** A functional material, **characterized in that** the functional material comprises a structure made by stacking at least two thin pieces each having a periodical configuration of strip-shaped conductive layers, each having a thickness in the range from 0.2 nm to 60 nm, and dielectric layers, each having a thickness larger than the thickness of each said conductive layer, such that the layers cross each other and edges of the conductive layers are opposed to each other.

**46.** A functional device, wherein the anisotropic structure which is a system of substance has different kinds of carriers of a plurality of interactions or physical phenomena, which are different by at least one order in characteristic time for propagation of interaction, different in nature each other, and serve as a host concerning a remarked interaction or physical phenomenon, **characterized in that** a second host substance corresponding to the carrier **characterized by** slow interaction or physical phenomenon is dispersed in the order from 1 nm to 100 nm scale by a first host substance corresponding to the carrier **characterized in** quick interaction time or physical phenomenon time.

**47.** A method of manufacturing a functional device, wherein the anisotropic structure which is a system of substance has different kinds of carriers of a plurality of interactions or physical phenomena, which are different by at least one order in characteristic time for propagation of interaction, different in nature each other, and serve as a host concerning a remarked interaction or physical phenomenon, **characterized in that** a second host substance corresponding to the carrier **characterized by** slow interaction or physical phenomenon is dispersed in the order from 1 nm to 100 nm scale by a first host substance corresponding to the carrier **characterized in** quick interaction time or physical phenomenon time.

**48.** A functional system, wherein the anisotropic structure which is a system of substance has different kinds of carriers of a plurality of interactions or physical phenomena, which are different by at least one order in characteristic time for propagation of interaction, different in nature each other, and serve as a host concerning a remarked interaction or physical phenomenon, **characterized in that** a second host substance corresponding to the carrier **characterized by** slow interaction or physical phenomenon is dispersed in the order from 1 nm to 100 nm scale by a first host substance corresponding to the carrier **characterized in** quick interaction time or physical phenomenon time.

**Fig. 1A**

IC PATTERN

**Fig. 1B**

VARIATION

IC PATTERN

TIME

SPACE
(STRUCTURE)

*Fig. 2A*

*Fig. 2B*

VARIATION

SPACE
(STRUCTURE)

TIME

# Fig. 3

EP 1 626 032 A1

# Fig. 4

25

# Fig. 5

VARIATION

TIME

SPACE
(STRUCTURE)

31

Fig. 6A

Fig. 6B

Fig. 6C

## Fig. 7

33

34

EP 1 626 032 A1

**Fig. 8A    Fig. 8B    Fig. 8C**

**Fig. 9**

# Fig. 10A

# Fig. 10B

# Fig. 10C

EP 1 626 032 A1

Fig. 11

Fig. 12

EP 1 626 032 A1

# Fig. 13

EP 1 626 032 A1

# Fig. 14

## Fig. 15

Fig. 16

# Fig. 17

# Fig. 18

EP 1 626 032 A1

Fig. 19

**_Fig. 20A_**

51

Vl

56

VI⇒+V2

**_Fig. 20B_**

0

Vr=-V1

TIME

52

A-

C+

53

55

57

54

Vr

## Fig. 21

EP 1 626 032 A1

60 59

61

62 55a 58

55b 55

EX. 1~1000 μm
(10~100 μm)

# Fig. 22

61

62

Fig. 23A

Fig. 23B

Fig. 23C

EP 1 626 032 A1

Fig. 24A

Fig. 24B

Fig. 24C

EP 1 626 032 A1

# Fig. 25

EP 1 626 032 A1

Fig. 26

EP 1 626 032 A1

Fig. 27B

Fig. 27A

SUPERLATTICE
THIN PIECE

SUPERLATTICE
THIN PIECE

EP 1 626 032 A1

# Fig. 28

116 115 116

115

62  62  62  62

EX. 10 μm

EX. 7nm

EX. 25nm

EP 1 626 032 A1

EP 1 626 032 A1

Fig. 29A

Fig. 29B

FRONT VIEW

SIDE VIEW

49

**Fig. 30A** 132

131

**Fig. 30B** 132

131

**Fig. 30C**

↑ REMOVAL OF DIE

132

131

VACUUM EVAPORATION

133

131

**Fig. 30D**

ETCHING

133

131

**Fig. 30E**

133

131

**Fig. 30F**

# DESCRIPTION OF SIGNS

| 2 1 | TPC |
| 3 1 | ONE-DIMENSIONAL SUPERLATTICE |
| 3 3, 3 4 | SUPERLATTICE THIN PIECE |
| 7 1, 7 2 | SUPERLATTICE THIN PIECE |
| 1 1 5, 1 1 6 | SUPERLATTICE THIN PIECE |
| 4 1, 4 2 | CONDUCTOR STRIP |
| 4 6, 4 7 | DIELECTRIC LAYER |
| 5 4 | ELECTROLYTIC SOLUTION |
| 6 1 | ELECTRODEPOSITED STRIP/RIBBON DIFFICULT TO DISSOLVE INTO SOLVENTS |
| 6 2 | ELECTRODEPOSITED METAL STRIP/RIBBON |
| 7 3, 7 4 | RELAY CIRCUIT |
| 8 2 | TWO-DIMENTIONAL STRUCTURE |
| 8 3 | CONNECTION PAD |
| 8 4, 8 5 | WIRING CONNECTOR |
| 8 7 | LSI |
| 9 1 | QUANTUM DOTS |
| 9 2 | PLANE HAVING FRACTAL STRUCTURE |
| 1 3 1 | RESIN SUBSTRATE |
| 1 3 2 | NANOSTRUCTURE DIE |
| 1 3 3 | METAL FILM |

## INTERNATIONAL SEARCH REPORT

| | International application No. |
|---|---|
| | PCT/JP2004/004260 |

**A. CLASSIFICATION OF SUBJECT MATTER**
    Int.Cl⁷  B82B1/00, H01L29/06

According to International Patent Classification (IPC) or to both national classification and IPC

**B. FIELDS SEARCHED**

Minimum documentation searched (classification system followed by classification symbols)
    Int.Cl⁷  B82B1/00-3/00, H01L29/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)
    Web of Science:TS=((superlattice OR multilayer) AND (intersect OR cross) AND electrode)

**C. DOCUMENTS CONSIDERED TO BE RELEVANT**

| Category* | Citation of document, with indication, where appropriate, of the relevant passages | Relevant to claim No. |
|---|---|---|
| X<br><br><br>A | JP 11-194134 A  (Canon Inc.),<br>21 July, 1999 (21.07.99),<br>Full text; particularly, Par. Nos. [0070] to [0073], [0132] to [0134]; Fig. 8<br>& EP 913508 A2          & US 2003/197456 A1 | 1,2,4-6,<br>8-10,12-14,<br>16-18,20,21,<br>25-27,37-41<br>3,7,11,15,<br>19,22-24,<br>28-36 |
| A | JP 05-037091 A  (President of Tokyo Institute of Technology),<br>12 February, 1993 (12.02.93),<br>Full text<br>(Family: none) | 22-24,34-36,<br>42-45 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    06 July, 2004 (06.07.04) | Date of mailing of the international search report<br>    20 July, 2004 (20.07.04) |
|---|---|
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2004/004260 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2001-284572 A  (HEWLETT-PACKARD CO.), 12 October, 2001 (12.10.01), Full text; particularly, Par. Nos. [0026] to [0044], [0052], [0066] & US 6459095 B1 | 22-24,34-36, 42-45 |
| A | JP 2002-190579 A  (Canon Inc.), 05 July, 2002 (05.07.02), Full text & EP 1193778 A2        & US 2002/041515 A1 | 22-24,34-36, 42-45 |
| X A | JP 10-012860 A  (The Institute of Physical and Chemical Research), 16 January, 1998 (16.01.98), Full text (Family: none) | 46-48 28-33 |
| X A | JP 03-203267 A  (Fujitsu Ltd.), 04 September, 1991 (04.09.91), Full text & EP 435779 B1        & US 5499206 A | 46-48 28-33 |

Form PCT/ISA/210 (continuation of second sheet) (January 2004)

## INTERNATIONAL SEARCH REPORT

| | International application No. |
|---|---|
| | PCT/JP2004/004260 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

A. Claims 1-41: relates to functional element constituted by joining a first structure and a second structure via a third structure having an anisotropic structure.

B. Claims 42-45: relate to a functional element consisting of a structure in which at least two thin pieces, each consisting of a periodic structure of strip-form conductor layers and dielectric layers, are stacked.

C. Claims 46-48: relate to a functional element consisting of a mixture of two substances different in interaction transmission time.

(continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☒   The additional search fees were accompanied by the applicant's protest.

☐   No protest accompanied the payment of additional search fees.

Form PCT/ISA/210 (continuation of first sheet (2)) (January 2004)